(19) Europäisches Patentamt
European Patent Office
Office européen des brevets

(11) **EP 4 644 581 A1**

(12) **EUROPEAN PATENT APPLICATION**
published in accordance with Art. 153(4) EPC

(43) Date of publication:
**05.11.2025 Bulletin 2025/45**

(21) Application number: **24753462.1**

(22) Date of filing: **09.02.2024**

(51) International Patent Classification (IPC):
*C23C 2/06* (2006.01)   *B32B 7/12* (2006.01)
*B32B 15/01* (2006.01)   *C22C 18/00* (2006.01)
*C22C 18/04* (2006.01)   *C22C 38/00* (2006.01)
*C22C 38/04* (2006.01)   *C23C 2/26* (2006.01)
*C23C 28/00* (2006.01)   *C21D 9/46* (2006.01)

(52) Cooperative Patent Classification (CPC):
**B32B 7/12; B32B 15/01; C22C 18/00; C22C 18/04;
C22C 38/00; C22C 38/04; C23C 2/06; C23C 2/26;
C23C 28/00;** C21D 9/46

(86) International application number:
**PCT/JP2024/004675**

(87) International publication number:
**WO 2024/167019 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.02.2023 JP 2023018549**

(71) Applicant: **NIPPON STEEL CORPORATION
Chiyoda-ku
Tokyo 100-8071 (JP)**

(72) Inventors:
• **HASEGAWA, Masumi
Tokyo 100-8071 (JP)**
• **MITSUNOBU, Takuya
Tokyo 100-8071 (JP)**
• **UENO, Shin
Tokyo 100-8071 (JP)**

(74) Representative: **Vossius & Partner
Patentanwälte Rechtsanwälte mbB
Siebertstrasse 3
81675 München (DE)**

(54) **BONDED/JOINED STRUCTURE**

(57)    To provide an adhesively bonded structure exhibiting more excellent adhesion durability while maintaining red rust resistance.

An adhesively bonded structure according to the present invention includes a first member, a second member, and an adhesive layer joining the first member and the second member, wherein: the first member is a plated steel member having a steel member and a plating layer having a predetermined chemical composition; in a surface structure of the plating layer, an average area ratio of an $\alpha$ precipitation $\eta$ phase which is a metal structure in which an $\alpha$ phase precipitates into an $\eta$ parent phase is 5 to 95%; and when a cross section cut in a lamination direction of the first member, the second member, and the adhesive layer is observed by an electron microscope in the adhesively bonded structure, an adhesion length which is a total of lengths in which the plating layer or the steel member, and the adhesive layer come in contact with each other is represented as L, and a length of an observation visual field in a direction orthogonal to a surface normal direction of the steel member is represented as $L_0$, a ratio $L/L_0$ is 1.10 or more.

FIG. 5

**Description**

TECHNICAL FIELD

The present invention relates to an adhesively bonded structure.

BACKGROUND ART

In a transportation equipment industry such as automobiles, use of an adhesive in joining between members is increasing for the purpose of vehicle body stiffness improvement, prevention of fracture at welded joints, dissimilar material joining, and the like. Joining the members to each other using the adhesive can make an extensive improvement in performance promising, so that the joining of the members using the adhesive is important as a means of reduction in weight of a vehicle body. Thus, various studies are being made as the purpose of an improvement in joining strength between the members in developing an adhesively bonded structure made by joining metal members to each other or joining the metal member and another material using the adhesive.

For example, Patent Document 1 below discloses a technical idea that in an adhesively bonded structure in which a first member and a second member each having a metal part are joined with an adhesive layer interposed therebetween, a specific coating layer is provided on at least a part of a surface of the metal part of the first member, and the first member is then joined to the adhesive layer with such a coating layer interposed therebetween in order to improve adhesion durability.

PRIOR ART DOCUMENT

PATENT DOCUMENT

Patent Document 1: International Publication Pamphlet No. WO 2020/067430

SUMMARY OF THE INVENTION

PROBLEMS TO BE SOLVED BY THE INVENTION

When the present inventors study the adhesively bonded structure disclosed in Patent Document 1 above, the technique disclosed in Patent Document 1 above is still desired for improvement in the viewpoint of more excellent adhesion durability.

Thus, the present invention was made in consideration of the above problem, and an object of the present invention is to provide an adhesively bonded structure exhibiting more excellent adhesion durability while maintaining red rust resistance.

MEANS FOR SOLVING THE PROBLEMS

To solve the above problem, as a result of being intensively studied by the present inventors, they have been able to obtain findings that more excellent adhesion durability can be achieved by controlling an adhesion state of a member and an adhesive layer constituting an adhesively bonded structure between the two.

The gist of the present invention completed based on such findings is as follows.

(1) An adhesively bonded structure includes a first member, a second member, and an adhesive layer joining the first member and the second member, wherein: the first member is a plated steel member having a steel member and a plating layer on the steel member; the plating layer has a chemical composition containing, by mass%, Al: 0.50 to 5.00%, Mg: 0.50 to 3.00%, and Fe: 0.01 to 15.00%, and selectively further containing one kind or two or more kinds selected from a group consisting of an element group A, an element group B, an element group C, an element group D, an element group E, an element group F, and an element group G described below, with the balance composed of Zn and impurities; in a surface structure in plan view of a surface of the plating layer, an average area ratio of an $\alpha$ precipitation $\eta$ phase which is a metal structure in which an $\alpha$ phase precipitates into an $\eta$ parent phase is 5 to 95%; and when a cross section cut in a lamination direction of the first member, the second member, and the adhesive layer is observed by an electron microscope in the adhesively bonded structure, an adhesion length which is a total of lengths in which the plating layer or the steel member, and the adhesive layer come in contact with each other is represented as L, and a length of an observation visual field in a direction orthogonal to a surface normal direction of the steel member is represented as $L_0$, a ratio $L/L_0$ is 1.10 or more.

[Element group A]: one kind or two kinds selected from a group consisting of Si: more than 0% to 2.00% or less, and Ca: more than 0% to 2.00% or less

[Element group B]: one kind or two or more kinds selected from a group consisting of Sb: more than 0% to 0.5000% or less, Pb: more than 0% to 0.50% or less, and Sr: more than 0% to 0.50% or less

[Element group C]: one kind or two or more kinds selected from a group consisting of Cu: more than 0% to 1.00% or less, Ti: more than 0% to 1.00% or less, Cr: more than 0% to 1.00% or less, Nb: more than 0% to 1.00% or less, Ni: more than 0% to 1.00% or less, Mn: more than 0% to 1.00% or less, Mo: more than 0% to 1.00% or less, Co: more than 0% to 1.0000% or less, and V: more than 0% to 1.0000% or less

[Element group D]: one kind or two or more kinds selected from a group consisting of Sn: more than 0% to 1.00% or less, In: more than 0% to 1.0000% or less, and Bi: more than 0% to 1.0000% or less

[Element group E]: one kind or two or more kinds selected from a group consisting of Zr: more than 0% to 1.00% or less, Ag: more than 0% to 1.00% or less, and Li: more than 0% to 1.00% or less

[Element group F]: one kind or two or more kinds selected from a group consisting of La: more than 0% to 0.50% or less, Ce: more than 0% to 0.50% or less, and Y: more than 0% to 0.50% or less

[Element group G]: B: more than 0% to 0.50% or less

(2) The adhesively bonded structure according to (1), having a chemical composition containing the element group A.

(3) The adhesively bonded structure according to (1), having a chemical composition containing the element group B.

(4) The adhesively bonded structure according to (1), having a chemical composition containing the element group C.

(5) The adhesively bonded structure according to (1), having a chemical composition containing the element group D.

(6) The adhesively bonded structure according to (1), having a chemical composition containing the element group E.

(7) The adhesively bonded structure according to (1), having a chemical composition containing the element group F.

(8) The adhesively bonded structure according to (1), having a chemical composition containing the element group G.

(9) The adhesively bonded structure according to any one of (1) to (8), wherein the plating layer contains Al of 1.00 to 5.00 mass%, and contains Mg of 1.00 to 3.00 mass%.

(10) The adhesively bonded structure according to any one of (1) to (8), wherein: the first member further includes a chemical treatment coating layer on the plating layer; and when the chemical treatment coating layer is present, the adhesion length L is a total of lengths in which the chemical treatment coating layer, the plating layer or the steel member, and the adhesive layer come in contact with each other.

(11) The adhesively bonded structure according to (9), wherein: the first member further includes a chemical treatment coating layer on the plating layer; and when the chemical treatment coating layer is present, the adhesion length L is a total of lengths in which the chemical treatment coating layer, the plating layer or the steel member, and the adhesive layer come in contact with each other.

(12) The adhesively bonded structure according to (10), wherein: the chemical treatment coating layer at least contains at least one or more kinds of a urethane group, an epoxy group, or an ester group, and a silicon compound having at least either a Si-O bond or a Si-OH bond; and when the chemical treatment coating layer is analyzed by a time-of-flight secondary ion mass spectrometry while performing Ar sputtering from the adhesive layer side toward the steel member side to include an arbitrary point at an interface between the plating layer and the chemical treatment coating layer, peaks corresponding to Si-O-Me bonds which are bonds with metallic elements Me (Me: Fe, Zn, Al, Mg) derived from the steel member or the plating layer are observed, and a value obtained by dividing a count number of the peaks corresponding to the Si-O-Me bonds by a total value of a count number of all secondary ions detected in a mass scan range m/z = 0 to 300 is $1.0 \times 10^{-3}$ or more.

(13) The adhesively bonded structure according to (11), wherein: the chemical treatment coating layer at least contains at least one or more kinds of a urethane group, an epoxy group, or an ester group, and a silicon compound having at least either a Si-O bond or a Si-OH bond; and when the chemical treatment coating layer is analyzed by a time-of-flight secondary ion mass spectrometry while performing Ar sputtering from the adhesive layer side toward the steel member side to include an arbitrary point at an interface between the plating layer and the chemical treatment coating layer, peaks corresponding to Si-O-Me bonds which are bonds with metallic elements Me (Me: Fe, Zn, Al, Mg) derived from the steel member or the plating layer are observed, and a value obtained by dividing a count number of the peaks corresponding to the Si-O-Me bonds by a total value of a count number of all secondary ions detected in a mass scan range m/z = 0 to 300 is $1.0 \times 10^{-3}$ or more.

(14) The adhesively bonded structure according to (1), wherein a tensile strength of the steel member is 980 MPa or more.

(15) The adhesively bonded structure according to (1), wherein a tensile strength of the steel member is 1180 MPa or more.

(16) The adhesively bonded structure according to (1), wherein the ratio $L/L_0$ is 1.30 or more.

(17) The adhesively bonded structure according to (1), wherein the ratio $L/L_0$ is 1.60 or more.

EFFECT OF THE INVENTION

According to the present invention as explained above, it becomes possible to provide the adhesively bonded structure exhibiting more excellent adhesion durability while maintaining the red rust resistance.

BRIEF DESCRIPTION OF THE DRAWINGS

[FIG. 1] FIG. 1 is an explanatory view schematically illustrating an example of an adhesively bonded structure according to an embodiment of the present invention.
[FIG. 2A] FIG. 2A is an explanatory view schematically illustrating an example of a structure of the adhesively bonded structure according to the embodiment.
[FIG. 2B] FIG. 2B is an explanatory view schematically illustrating an example of a structure of the adhesively bonded structure according to the embodiment.
[FIG. 3] FIG. 3 is an explanatory view for explaining a plating layer which a first member of the adhesively bonded structure according to the embodiment has.
[FIG. 4] FIG. 4 is an explanatory view for explaining the plating layer which the first member of the adhesively bonded structure according to the embodiment has.
[FIG. 5] FIG. 5 is an explanatory view for explaining an adhesion length in the adhesively bonded structure according to the embodiment.

EMBODIMENTS FOR CARRYING OUT THE INVENTION

A preferred embodiment of the present invention will be explained in detail with reference to the accompanying drawings below. Note that in this specification and the drawings, components that have substantially the same functional configuration will be omitted from the duplicated explanation by applying the same codes.

(Regarding adhesively bonded structure)

<Regarding overall configuration of adhesively bonded structure>

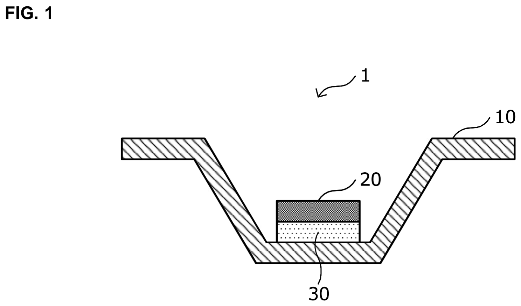

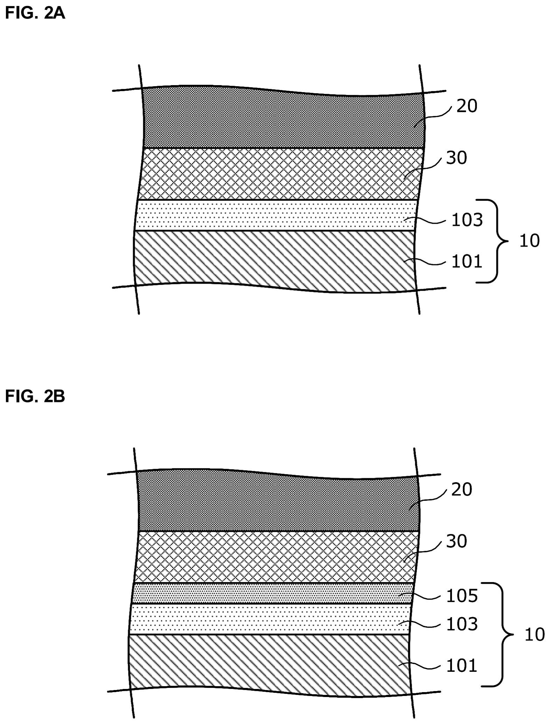

First, an overall configuration of an adhesively bonded structure according to an embodiment of the present invention will be explained with reference to FIG. 1. FIG. 1 is an explanatory view schematically illustrating an example of the adhesively bonded structure according to this embodiment.
As schematically illustrated in FIG. 1, an adhesively bonded structure 1 according to this embodiment has a first member 10 and a second member 20. In FIG. 1, an example of using a so-called hat-shaped metal member is illustrated as an example of the first member 10. The first member 10 illustrated in FIG. 1 has a web portion, a pair of vertical wall sections connecting to both edges in a width direction of such a web portion, and a pair of flange portions connecting to these vertical wall sections, and is a metal member whose cross-sectional shape perpendicular to a long side direction (depth direction of the paper plane) is a hat shape. Such a web portion has a rectangular shape long in one direction.
In FIG. 1, the second member 20 is joined to the first member 10 with an adhesive layer 30 interposed therebetween in an adhesive region inside the web portion of the first member 10. Here, the inside of the web portion means a region surrounded by the web portion and the vertical wall sections.
Note that in the following, a case where the first member 10 is in a hat shape is cited and explained as an example, and the members constituting the adhesively bonded structure 1 in this embodiment are not limited to shapes of a mode of the illustration. Further, in this embodiment, at least the first member 10 only needs to be a zinc-plated steel member having such a specific plating layer as described in detail below, and a material of the second member 20 is not particularly limited.
In the following, attention is focused on the adhesive region where the first member 10 and the second member 20 are joined with the adhesive layer 30 interposed therebetween, and configurations of the adhesively bonded structure 1 in such an adhesive region will be explained in detail with reference to FIGs. 2. FIGs. 2 are each an explanatory view schematically illustrating an example of a structure in the adhesive region of the adhesively bonded structure 1 according to this embodiment.

<Regarding first member 10>

Next, the first member 10 which the adhesively bonded structure 1 according to this embodiment has will be explained with reference to FIG. 2A and FIG. 2B. FIG. 2A and FIG. 2B are each the explanatory view schematically illustrating the example of the structure of the adhesively bonded structure according to this embodiment.

In the adhesively bonded structure 1 according to this embodiment, as a material of the first member 10 in at least the adhesive region, the zinc-plated steel member having the specific plating layer is used as mentioned earlier. Here, the steel member indicates a steel product obtained by processing a steel sheet, and used in automobile, home electric appliance, and building material fields. The first member 10 in the adhesive region may have a steel member 101 as a base metal of the zinc-plated steel member, and a plating layer 103 on the steel member 101 as schematically illustrated in FIG. 2A, or may have the steel member 101 as the base metal of the zinc-plated steel member, the plating layer 103 on the steel member 101, and a chemical treatment coating layer 105 on the plating layer 103 as schematically illustrated in FIG. 2B.

In the following, a case where the first member 10 according to this embodiment has the steel member 101, the plating layer 103, and the chemical treatment coating layer 105 as illustrated in FIG. 2B will be cited and explained as an example.

<<Regarding steel member 101>>

Dimensions, components, a structure, and mechanical properties of the steel member 101 as the base metal of the first member 10 are not particularly limited. For example, various steel members can be used depending on mechanical strength (for example, tensile strength) required for the adhesively bonded structure 1, or the like. Examples of such a steel member 101 include steel materials standardized by Japanese Industrial Standards (JIS) or the like, and there can be cited carbon steel, alloy steel, high-tension steel which are used as general structure use and machine structure use, and the like. As concrete examples of such steel materials, there can be cited a cold-rolled steel material, a hot-rolled steel material, a hot-rolled steel sheet material for automobile structure, a hot-rolled high-tension steel sheet material for automobile manufacturing, a cold-rolled steel sheet material for automobile structure, a cold-rolled high-tension steel sheet material for automobile manufacturing, a high-tension steel material, commonly called a hot stamping material, quenched during hot working, and the like. Components of such steel materials are not particularly limited, but may contain one kind or two or more kinds of Si, Mn, S, P, Al, N, Cr, Mo, Ni, Cu, Ca, Mg, Ce, Hf, La, Zr, and Sb in addition to Fe and C. One kind or two or more kinds of these optional additive elements can be appropriately selected and their contents can also be appropriately adjusted to obtain required material strength and formability.

In the high-strength steel as described above, for example, using the high-strength steel having a tensile strength of 980 MPa or more (so-called high-strength steel with 980 MPa grade or more) or the high-strength steel having a tensile strength of 1180 MPa or more (so-called high-strength steel with 1180 MPa grade or more) allows robustness of manufactured products to be further improved, which is thus more preferable. Here, the tensile strength of the steel member 101 can be measured by a well-known method. As an example, with respect to the adhesively bonded structure intended for measurement of tensile strength, a chisel is inserted in a position of the adhesive layer to break the adhesive layer. Thereafter, the chemical treatment coating layer and the adhesive layer remaining on the first member are removed using a coating film remover. Subsequently, the remaining plating layer is immersed in a 10% HCl aqueous solution with an inhibitor added for about one minute to peel off a portion of the plating layer, and thereby a sample of the steel member 101 can be obtained. A specimen defined by JIS Z 2241:2011 only needs to be manufactured from a part of such a sample to measure the tensile strength by a method in which the obtained specimen is defined. Note that when the sample of the steel member 101 cannot be obtained from a portion where the adhesive layer has been present, a specimen defined by JIS Z 2241:2011 only needs to be manufactured from a flat portion continuing with the steel member 101 and having no adhesive layer to measure the tensile strength. The tensile strength obtained in this manner is regarded as the tensile strength of the steel member 101 present in the portion where the adhesive layer has been present. Note that there is no significant change in the tensile strength of the steel material even though the plating layer is present, and thus the measured tensile strength can be regarded as the tensile strength of the steel member 101 even though the plating layer is present on the specimen obtained as described above.

Further, a thickness of the steel member 101 is not particularly limited, but only needs to be appropriately set according to mechanical strength required for the first member 10, or the like.

<<Regarding plating layer 103>>

The plating layer 103 is provided on a surface of the steel member 101 in the adhesive region as schematically illustrated in FIG. 2B, and is more preferably provided over the entire surface of the steel member 101. First, a chemical composition of such a plating layer 103 will be explained in detail below.

◊ Regarding chemical composition of plating layer 103

The chemical composition of the plating layer 103 according to this embodiment has, according to one aspect, a chemical composition containing, by mass%, Al: 0.50 to 5.00%, Mg: 0.50 to 3.00%, and Fe: 0.01 to 15.00%, with the balance composed of Zn and impurities.

Further, the chemical composition of the plating layer 103 according to this embodiment has, according to the other aspect, a chemical composition containing, by mass%, Al: 0.50 to 5.00%, Mg: 0.50 to 3.00%, and Fe: 0.01 to 15.00%, and further containing one kind or two or more kinds selected from a group consisting of an element group A, an element group B, an element group C, an element group D, an element group E, an element group F, and an element group G described below, with the balance composed of Zn and impurities. That is, in the chemical composition of the plating layer 103 according to this embodiment, contents of Al, Mg, Fe are in the above ranges and a total of these contents of Al, Mg, Fe, and the element group A to element group G is less than 100 mass%, and the balance is Zn and impurities.

[Element group A]: one kind or two kinds selected from a group consisting of Si: more than 0% to 2.00% or less, and Ca: more than 0% to 2.00% or less

[Element group B]: one kind or two or more kinds selected from a group consisting of Sb: more than 0% to 0.5000% or less, Pb: more than 0% to 0.5000% or less, and Sr: more than 0% to 0.5000% or less

[Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less

[Element group D]: one kind or two or more kinds selected from a group consisting of Sn: more than 0% to 1.0000% or less, In: more than 0% to 1.0000% or less, and Bi: more than 0% to 1.0000% or less

[Element group E]: one kind or two or more kinds selected from a group consisting of Zr: more than 0% to 1.0000% or less, Ag: more than 0% to 1.0000% or less, and Li: more than 0% to 1.0000% or less

[Element group F]: one kind or two or more kinds selected from a group consisting of La: more than 0% to 0.5000% or less, Ce: more than 0% to 0.5000% or less, and Y: more than 0% to 0.5000% or less [Element group G]: B: more than 0% to 0.5000% or less

Thus, the plating layer 103 according to this embodiment is a plating layer having the chemical composition containing, by mass%, Al: 0.50 to 5.00%, Mg: 0.50 to 3.00%, and Fe: 0.01 to 15.00%, and selectively further containing one kind or two or more kinds selected from the group consisting of the element group A, the element group B, the element group C, the element group D, the element group E, the element group F, and the element group G, with the balance composed of Zn and impurities.

[Al: 0.50 to 5.00 mass%]

Al is an element necessary to constitute a main phase (Zn-Al-Mg-based alloy phase) of the plating layer 103 according to this embodiment, and is contained over a certain level to ensure corrosion resistance as a plated steel member. When an Al content in the plating layer 103 is less than 0.50 mass%, the corrosion resistance as the plated steel member cannot be ensured. Therefore, in the plating layer 103 according to this embodiment, the Al content is 0.50 mass% or more. The Al content is preferably 1.00 mass% or more, and more preferably 1.00 mass% or more. The Al content is in the range as described above, thereby allowing the corrosion resistance as the plated steel member to be ensured.

On the other hand, when the Al content in the plating layer 103 exceeds 5.00 mass%, solidification behavior from a liquid phase to a solid phase of the plating layer changes, which makes it difficult to crystallize an $\eta$ phase, resulting in forming a dendrite structure mainly composed of Al. When the dendrite structure mainly composed of Al is formed, surrounding corrosion is accelerated, so that the corrosion resistance as the plated steel member cannot be ensured. In addition, a shortage of the $\eta$ phase decreases an interface, between the $\eta$ phase and a eutectic structure, serving as a source of crack initiation to also cause a shortage of cracks being generated during processing. Therefore, in the plating layer 103 according to this embodiment, the Al content is 5.00 mass% or less. The Al content is preferably 4.00 mass% or less, and more preferably 3.00 mass% or less.

[Mg: 0.50 to 3.00 mass%]

Mg is an element necessary to constitute the main phase (Zn-Al-Mg-based alloy phase) of the plating layer 103 according to this embodiment, and is contained over a certain level to ensure the corrosion resistance as the plated steel member. Therefore, in the plating layer 103 according to this embodiment, a Mg content is 0.50 mass% or more. The Mg content is preferably 1.50 mass% or more, and more preferably 2.00 mass% or more. The Mg content is in the range as described above, thereby allowing the corrosion resistance as the plated steel member to be ensured. When the Mg content exceeds 3.00%, it becomes difficult that an $\alpha$ phase precipitates from the $\eta$ phase. The $\eta$ phase in which Al is solid-dissolved is hard, thus failing to concentrate a transformation on the $\eta$ phase during processing to cause a decrease in the number of cracks. Therefore, an upper limit of the Mg content is 3.00%.

On the other hand, when the Mg content in the plating layer 103 is less than 0.50 mass%, a corrosion resistance improvement effect by reforming of a corrosion product is insufficient, so that the corrosion resistance as the plated steel member cannot be ensured. Furthermore, a shortage of the Mg content softens the entire plating layer 103, and prevents the concentration of the transformation on the η phase during processing to cause the decrease in the number of cracks. Therefore, in the plating layer 103 according to this embodiment, the Mg content is 0.50 mass% or more. The Mg content is preferably 1.50 mass% or more, and more preferably 2.00 mass% or more. The Mg content is in the range as described above, thereby allowing the corrosion resistance as the plated steel member to be ensured.

[Fe: 0.01 to 15.00 mass%]

Elements constituting the steel member sometimes mix from the steel member 101 which is base metal into the plating layer 103. In particular, in a hot-dip plating method, the elements constituting the steel member 101 easily mix into the plating layer 103 due to interdiffusion of the elements by a solid-liquid reaction between the steel member 101 and the plating layer 103. Due to such mixing of the elements, a certain amount of Fe is contained in the plating layer 103, and the content is generally 0.01 mass% or more. When the above interdiffusion is promoted, adhesiveness between the steel member 101 and the plating layer 103 improves. From the viewpoint of the improvement in the adhesiveness between the steel member 101 and the plating layer 103, an Fe content in the plating layer 103 is preferably 0.20 mass% or more.

Further, Fe may be intentionally added into a plating bath used in manufacturing the plating layer 103 in a range where the effect of the present invention is not impaired. However, when the Fe content in the plating layer 103 is 15.00 mass% or more, high melting point intermetallic compounds of Fe and Al are formed in the plating bath, and such high melting point intermetallic compounds adhere to the plating layer as dross to significantly degrade an appearance quality, which is thus undesirable. From such a viewpoint, the Fe content in the plating bath is adjusted, so that the Fe content in the plating layer 103 is 15.00 mass% or less. The Fe content in the plating layer 103 is more preferably 10.00 mass% or less.

In the plating layer 103, the balance of the above Al, Mg, and Fe is Zn and impurities.

Zn is an element necessary to constitute the main phase (Zn-Al-Mg-based alloy phase) of the plating layer 103 according to this embodiment, and an element important for improving the corrosion resistance as the plated steel member.

Subsequently, the element group A to the element group E which the chemical composition of the plating layer 103 according the other aspect of this embodiment can have will be explained in detail.

Note that in the plating layer 103 according to this embodiment, when at least any of the elements belonging to the following element group B to element group E is contained, it is preferable to contain at least any of the elements belonging to the following element group B to element group E within the following contents and in a total content of 5.0000 mass% or less.

Such effects expressed by addition of the elements as described in detail below can be enjoyed without impairing one another by setting the total content of the elements belonging to the element group B to the element group E to 5.0000 mass% or less. The total content of the elements belonging to the element group B to the element group E is preferably 1.0000 mass% or less, and more preferably 0.2000 mass% or less.

◇ Element group A

In the other aspect of the plating layer 103 according to this embodiment, the element group A which the plating layer 103 can contain will be explained. At least either of the elements in the element group A indicated below is the element which can be contained in the plating layer 103 in place of a part of Zn of the balance.

[Element group A]: one kind or two kinds selected from a group consisting of Si: more than 0% to 2.00% or less, and Ca: more than 0% to 2.00% or less

[Si: 0 to 2.00 mass%]

A case where the plating layer 103 according to this embodiment does not contain Si can also be considered, and thus a lower limit of a content of Si is 0 mass%. On the other hand, Si is an element capable of suppressing excessive growth of an Fe-Al-based intermetallic compound formed at an interface between the plating layer and the steel member and further improving the adhesiveness between the plating layer 103 and the steel member 101. When Si is contained in the plating layer 103, the content of Si is preferably 0.05 mass% or more, and more preferably 0.10 mass% or more to suppress the excessive growth of the Fe-Al-based intermetallic compound.

On the other hand, when the content of Si exceeds 2.00 mass%, Si excessively forms a high melting point intermetallic compound with Mg. The first member 10 according to this embodiment is sometimes joined to the second member 20 by a second joining method such as welding in addition to the adhesive layer 30, and when such a high melting point intermetallic compound of Si and Mg is excessively formed, there is a possibility of inhibiting the formation of an Al-Mg oxide expressing a Zn evaporation suppression effect in welding a section where the plating layer is present. Therefore, the content of Si in the plating layer 103 is preferably 2.00 mass%. Further, when the Si content in the plating bath for manufacturing the plating layer 103 is too high, viscosity of the plating bath may increase more than necessary, and plating operability may decrease. Therefore, the Si content in the plating layer 103 is preferably 1.00 mass% or less, and more preferably 0.50 mass% or less by adjusting the Si content in the plating bath from the viewpoint of the plating operability.

[Ca: 0 to 2.00 mass%]

A case where the plating layer 103 according to this embodiment does not contain Ca can also be considered, and thus a lower limit of a content of Ca is 0 mass%. On the other hand, when Ca is contained in the plating layer 103, it forms intermetallic compounds with Al and Zn. Furthermore, when Si is contained together with Ca in the plating layer 103, Ca forms an intermetallic compound with Si. These intermetallic compounds have a high melting point and a stable structure, so that when welding is adopted as the second joining method, liquid metal embrittlement (LME) during welding can be suppressed. When Ca is contained in the plating layer 103, such a suppression effect of the LME during welding is expressed by setting a Ca content to 0.01 mass% or more. The Ca content in the plating layer 103 is more preferably 0.05 mass% or more.
On the other hand, when the Ca content in the plating layer 103 exceeds 2.00 mass%, the corrosion resistance as the plated steel member may decrease. From such a viewpoint, the Ca content in the plating layer 103 is 2.00 mass% or less. The Ca content in the plating layer 103 is preferably 1.50 mass% or less, and more preferably 1.00 mass% or less.

◊ Element group B

Subsequently, in the other aspect of the plating layer 103 according to this embodiment, the element group B which the plating layer 103 can contain will be explained. At least any of the elements in the element group B indicated below is the element which can be contained in the plating layer 103 in place of a part of Zn of the balance.
[Element group B]: one kind or two or more kinds selected from a group consisting of Sb: more than 0% to 0.5000% or less, Pb: more than 0% to 0.5000% or less, and Sr: more than 0% to 0.5000% or less
[Sb: 0 to 0.5000 mass%]
[Pb: 0 to 0.5000 mass%]
[Sr: 0 to 0.5000 mass%]

A case where the plating layer 103 according to this embodiment does not contain Sb, Pb, or Sr can also be considered, and thus a lower limit of a content of each of these elements is 0 mass%. On the other hand, when at least any of Sb, Pb, and Sr is contained in the plating layer 103, spangles are formed on a surface of the plating layer 103, so that metallic luster can be improved. Thus, from the viewpoint of improvement in design as the plated steel member, at least any of Sb, Pb, and Sr is preferably contained in the plating layer 103. Such a design improvement effect is expressed when the content of at least any of Sb, Pb, and Sr is 0.0500 mass% or more. Therefore, when at least any of Sb, Pb, and Sr is contained in the plating layer 103, it is preferable that the contents of these elements are each independently set to 0.0500 mass% or more.
On the other hand, when the plating layer 103 in which any of the contents of Sb, Pb, and Sr exceeds 0.5000 mass% is formed, a generation amount of dross in the plating bath used to form the plating layer 103 increases, and a plated steel sheet with good plating properties cannot be manufactured. Therefore, the contents of Sb, Pb, and Sr in the plating layer 103 are each independently 0.5000 mass% or less. It is preferable that the contents of Sb, Pb, and Sr are each independently 0.2000 mass% or less.

◊ Element group C

Subsequently, in the other aspect of the plating layer 103 according to this embodiment, the element group C which the plating layer 103 can contain will be explained. At least any of the elements in the element group C indicated below is the element which can be contained in the plating layer 103 in place of a part of Zn of the balance.
[Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less
[Cu: 0 to 1.0000 mass%]
[Ti: 0 to 1.0000 mass%]
[Cr: 0 to 1.0000 mass%]
[Nb: 0 to 1.0000 mass%]
[Ni: 0 to 1.0000 mass%]
[Mn: 0 to 1.0000 mass%]
[Co: 0 to 1.0000 mass%]
[V: 0 to 1.0000 mass%]

A case where the plating layer 103 according to this embodiment does not contain Cu, Ti, Cr, Nb, Ni, Mn, Co, or V can also be considered, and thus a lower limit of a content of each of these elements is 0 mass%. On the other hand, when at least any of Cu, Ti, Cr, Nb, Ni, Mn, Co and V is contained in the plating layer 103, these elements are incorporated into the Fe-Al-based intermetallic compound formed by the welding when welding is adopted as the second joining method, and the corrosion resistance of the formed welded part can be improved. Such an improvement effect of the corrosion resistance of the welded part is expressed when the content of at least any of Cu, Ti, Cr, Nb, Ni, Mn, Co and V in the plating layer 103 is 0.0050 mass% or more. Therefore, when at least any of Cu, Ti, Cr, Nb, Ni, Mn, Co and V is contained in the plating layer 103, it is preferable that the contents of these elements are each independently set to 0.0050 mass% or more.

On the other hand, when the plating layer 103 in which any of the contents of Cu, Ti, Cr, Nb, Ni, Mn, Co and V exceeds 1.0000 mass% is formed, these elements form various intermetallic compounds in the plating bath to form the plating layer 103, causing the viscosity of the plating bath to increase to make it impossible to manufacture a plated steel member with good plating properties. Therefore, the contents of Cu, Ti, Cr, Nb, Ni, Mn, Co and V in the plating layer 103 are each independently set to 1.0000 mass% or less. It is preferable that the contents of Cu, Ti, Cr, Nb, Ni, Mn, Co and V are each independently 0.2000 mass% or less.

[Mo: 0 to 1.0000 mass%]

A case where the plating layer 103 according to this embodiment does not contain Mo can also be considered, and thus a lower limit of a content of Mo is 0 mass%. On the other hand, when Mo is contained in the plating layer 103, the corrosion resistance can be further improved. Such an improvement effect of the corrosion resistance is expressed when a content of Mo is 0.0100 mass% or more. Therefore, when Mo is contained, the content thereof is preferably set to 0.0100 mass% or more.

On the other hand, a case of forming the plating layer 103 in which the content of Mo exceeds 1.0000 mass% causes a large amount of dross to be generated in the plating bath to be used, which is thus undesirable. Therefore, the content of Mo is 1.0000 mass% or less. The content of Mo is preferably 0.0500 mass% or less.

◊ Element group D

Subsequently, in the other aspect of the plating layer 103 according to this embodiment, the element group D which the plating layer 103 can contain will be explained. The elements in the element group D indicated below are the elements which can be contained in the plating layer 103 in place of a part of Zn of the balance.
[Element group D]: one kind or two or more kinds selected from a group consisting of Sn: more than 0% to 1.0000% or less, In: more than 0% to 1.0000% or less, and Bi: more than 0% to 1.0000% or less
[Sn: 0 to 1.0000 mass%]
[In: 0 to 1.0000 mass%]
[Bi: 0 to 1.0000 mass%]

A case where the plating layer 103 according to this embodiment does not contain Sn, In, or Bi can also be considered, and thus a lower limit of each of contents of Sn, In, and Bi is 0 mass%. On the other hand, Sn, In, and Bi are elements which increase a Mg dissolution rate when the plating layer 103 containing them is placed in the corrosive environment. When the Mg dissolution rate increases, Mg ions are supplied to a portion where the steel member 101 is exposed, to improve the corrosion resistance. From such a viewpoint, when Sn, In, and Bi are contained, it is preferable that the contents of Sn, In, and Bi are each independently set to 0.0050 mass% or more. On the other hand, excessive addition of Sn, In, and Bi may excessively accelerate the Mg dissolution rate, and the corrosion resistance as the plated steel member may decrease. Such an increase in the Mg dissolution rate becomes more pronounced when any of the contents of Sn, In, and Bi exceeds 1.0000 mass%, and thus the contents of Sn, In, and Bi are each independently 1.0000 mass% or less. It is preferable that the contents of Sn, In, and Bi are each independently 0.2000 mass% or less.

◊ Element group E

Subsequently, in the other aspect of the plating layer 103 according to this embodiment, the element group E which the plating layer 103 can contain will be explained. At least any of the elements in the element group E indicated below is the element which can be contained in the plating layer 103 in place of a part of Zn of the balance.
[Element group E]: one kind or two or more kinds selected from a group consisting of Zr: more than 0% to 1.0000% or less, Ag: more than 0% to 1.0000% or less, and Li: more than 0% to 1.0000% or less

[Zr: 0 to 1.0000 mass%]
[Ag: 0 to 1.0000 mass%]
[Li: 0 to 1.0000 mass%]

A case where the plating layer 103 according to this embodiment does not contain Zr, Ag, or Li can also be considered, and thus a lower limit of a content of each of these elements is 0 mass%. On the other hand, when at least any of Zr, Ag, and Li is contained in the plating layer 103, the plating operability can be improved. Such an improvement effect of platability is expressed when the content of at least any of Zr, Ag, and Li in the plating layer 103 is 0.0100 mass% or more. Therefore, when at least any of Zr, Ag, and Li is contained, it is preferable that the contents of these elements are each independently set to 0.0100 mass% or more.

On the other hand, when the plating layer 103 in which any of the contents of Zr, Ag, and Li exceeds 1.0000 mass% is formed, a large amount of dross is likely to be generated in the plating bath used to form the plating layer 103. Therefore, the content of at least any of Zr, Ag, and Li is independently 1.0000 mass% or less. It is preferable that the content of at least any of Zr, Ag, and Li is independently 0.1000 mass% or less.

◊ Element group F

Subsequently, in the other aspect of the plating layer 103 according to this embodiment, the element group F which the plating layer 103 can contain will be explained. At least any of the elements in the element group F indicated below is the element which can be contained in the plating layer 103 in place of a part of Zn of the balance.
[Element group F]: one kind or two or more kinds selected from a group consisting of La: more than 0% to 0.5000% or less, Ce: more than 0% to 0.5000% or less, and Y: more than 0% to 0.5000% or less

[La: 0 to 0.5000 mass%]
[Ce: 0 to 0.5000 mass%]
[Y: 0 to 0.5000 mass%]

A case of not containing La, Ce, or Y in the plating layer 103 according to this embodiment can also be considered, and thus a lower limit of a content of each of these elements is 0 mass%. On the other hand, La, Ce, and Y are elements which express almost the same effect as Ca. This is because an atomic radius of each element is close to an atomic radius of Ca. When these elements are contained in the plating layer 103, they replace a Ca position.

The contents of these elements are each independently set to 0.0100 mass% or more, and thereby such a effect is expressed. Therefore, when at least any of Zr, Ag, and Li is contained, it is preferable that the contents of these elements are each independently set to 0.0100 mass% or more. It is more preferable that the contents of La, Ce, and Y in the plating layer 103 are each independently 0.0500 mass% or more.

On the other hand, when the La, Ce, and Y contents are too high in the plating bath for manufacturing the plating layer 103, the viscosity of the plating bath may increase more than necessary and the plating operability may decrease. Therefore, the La, Ce, and Y contents in the plating bath are adjusted from the viewpoint of the plating operability, so that the contents of La, Ce, and Y are each independently 0.5000 mass% or less. It is preferable that the contents of La, Ce, and Y are each independently 0.1000 mass% or less.

◊ Element group G

Subsequently, in the other aspect of the plating layer 103 according to this embodiment, the element group G which the plating layer 103 can contain will be explained. The element in the element group G indicated below is the element which can be contained in the plating layer 103 in place of a part of Zn of the balance.
[Element group G]: B: more than 0% to 0.5000% or less

[B: 0 to 0.5000 mass%]

A case of not containing B in the plating layer 103 according to this embodiment can also be considered, and thus a lower limit of a content thereof is 0 mass%. On the other hand, when B is contained in the plating layer 103, it has the effect of suppressing the LME in a case of adopting welding as the second welding method. This is presumably because when B is contained in the plating layer 103, it forms various intermetallic compounds by combining with at least any of Zn, Al, Mg, and Ca. Further, the presence of B in the plating layer 103 is considered to have the effect of suppressing the LME of the steel member 101 by diffusing B from the plating layer 103 into the steel member 101 and strengthening grain boundary. Furthermore, the various intermetallic compounds formed with respect to B presumably also act on suppression of the Zn evaporation during welding because of their extremely high melting points. These improvement effects are expressed by containing B of 0.0500 mass% or more. Therefore, when B is contained, the content of B is preferably 0.0500 mass% or more.

On the other hand, in order to contain B in the plating layer 103, excessively containing B in the plating bath causes a rapid increase in a plating melting point to lead to a decrease in the plating operability, and plated steel sheets excellent in plating properties cannot be manufactured. Such a decrease in the plating operability becomes pronounced when the content of B exceeds 0.50 mass%, and thus the content of B is 0.5000 mass% or less. The content of B is preferably 0.1000 mass% or less.

[Measurement method of chemical component]

Chemical components of the above plating layer 103 can be measured using ICP-AES (inductively coupled plasma atomic emission spectrometry) or ICP-MS (inductively coupled plasma mass spectrometry). Note that the ICP-AES shall be used when analyzing chemical components down to 0.1 mass% units, and the ICP-MS shall be used when analyzing chemical components in trace amounts of less than 0.1 mass%. A sample collected, in the following manner, from the adhesively bonded structure on which attention is focused is immersed in a 10% HCl aqueous solution with an inhibitor added for about one minute to peel off a portion of the plating layer, and the solution dissolving the plating layer is prepared. The chemical components as the overall average of the plating layer can be obtained by analyzing the obtained solution by the ICP-AES or the ICP-MS.

Here, when the sample of the plating layer is collected from the adhesively bonded structure on which attention is focused, the collection only needs to be performed as follows.

First, in the adhesively bonded structure, the chisel is inserted in a position of the adhesive layer located between the first member and the second member to break the adhesive layer. Thereafter, the chemical treatment coating layer and the adhesive layer remaining on the first member are removed using the coating film remover. The sample for analyzing the chemical components can be obtained in this manner.

Further, when a sample of the first member cannot be obtained from a portion where the adhesive layer has been present, the sample of the first member only needs to be pulled out of the same surface on the side where the adhesive layer has been present to be analyzed as described above. The analysis result obtained in this manner is regarded as an analysis result of the plating layer present in the portion where the adhesive layer has been present.

◊ Regarding coating weight of plating layer 103

Although a coating weight of the plating layer 103 as explained above is not particularly specified, for example, it is preferably about 15 to 250 g/m$^2$ per one side of the steel member. The coating weight of the plating layer 103 is in the range as described above, thereby allowing the plated steel member according to this embodiment to exhibit sufficient corrosion resistance.

Such a coating weight of the plating layer 103 is measured as follows. First, a sample is cut into a size of 30 mm × 30 mm in plan view from the adhesively bonded structure on which attention is focused in the same manner as described above. Note that when the sample is cut thereinto, it is cut entirely in a thickness direction, and the chemical treatment coating layer, the adhesive layer, and the like are removed using the coating film remover. Thereafter, a mass of the sample collected in this manner is measured beforehand. A tape seal is applied to one side of the sample to prevent the plating layer on this side from dissolving in the next process. Such a sample is then immersed in the 10% HCl aqueous solution with an inhibitor added, the plating layer is peeled off by pickling, and the mass of the sample after pickling is measured. From a change in the mass of the sample before and after pickling, the coating weight of the plating layer 103 per one side can be determined.

Note that when the sample of the first member cannot be obtained from a portion where the adhesive layer has been present, the sample of the first member only needs to be pulled out of a flat portion continuing with the steel member 101 and having no adhesive layer to be measured as described above. The measured result of the coating weight obtained in this manner is regarded as a measured result of the plating layer present in the portion where the adhesive layer has been present.

◊ Regarding metal structure of plating layer 103

Subsequently, the metal structure of the plating layer 103 having the chemical composition explained above will be explained.

The plating layer 103 according to this embodiment has the above chemical composition. Further, the plating layer 103 contains a metal phase or an intermetallic compound phase such as an $\alpha$ phase, an $\eta$-Zn phase, a $MgZn_2$ phase, an $\eta/\alpha/MgZn_2$ ternary eutectic phase, or an $\eta/MgZn_2$ binary eutectic phase by being formed through a manufacturing method described in detail below. Further, depending on the elements which the plating layer 103 can further contain, the plating layer 103 can contain an intermetallic compound phase such as an Al-Si-Ca phase, an Al-Si-Ca-Fe phase, a $Mg_2Si$ phase, or a $Mg_2Sn$ phase in addition to the phases as described above. The plating layer 103 according to this embodiment has the metal structure as described above, thereby exhibiting properties of having the excellent corrosion resistance. In addition, in the plating layer 103 according to this embodiment, parts of the above $\alpha$ phase and $\eta$-Zn phase are present in a specific state as described in detail below.

Here, what kind of metal structure the plating layer 103 according to this embodiment has can be identified by observing the surface of the plating layer 103 with a scanning electron microscope (SEM).

In such an observation, first, a sample is collected from the adhesively bonded structure on which attention is focused, and the surface of the plating layer 103 is exposed using the coating film remover in the same manner as described above. Thereafter, a solidified structure on the surface of the plating layer 103 is observed by the SEM, and what kind of phase the plating layer 103 has can be identified from a point analysis result with a SEM-EPMA (electron probe micro analyzer) and a form of a crystal phase in a backscattered electron image in the viewing field. At this time, a pre-process such as, for example, polishing need not be performed before the SEM observation.

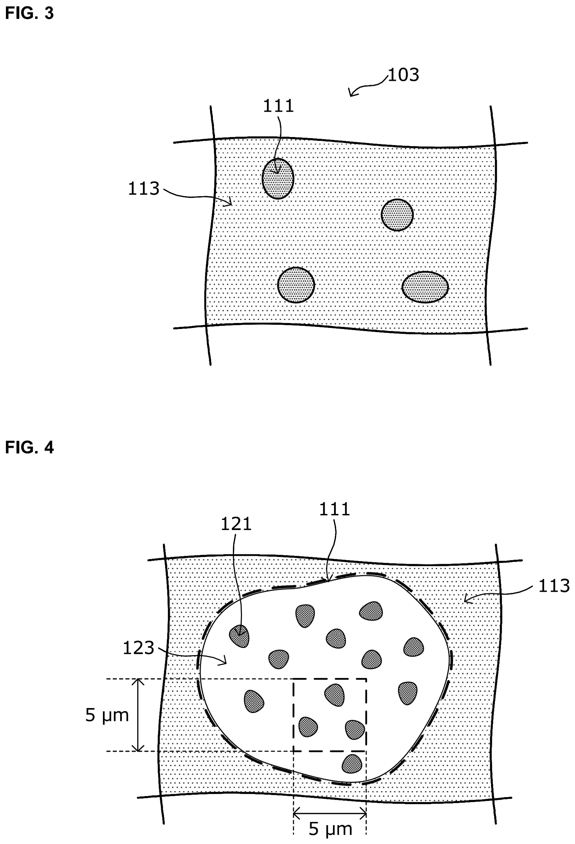

Subsequently, the specific state which parts of the $\alpha$ phase and the $\eta$-Zn phase exhibit will be explained in detail in the plating layer 103 according to this embodiment with reference to FIG. 3 and FIG. 4. FIG. 3 and FIG. 4 are each a schematic view for explaining an $\alpha$ precipitation $\eta$ phase which the plating layer 103 according to this embodiment has.

Attention is focused on a case where the surface of the plating layer 103 according to this embodiment is observed from the surface normal direction by the electron microscope (SEM).

In such an observation, in the plating layer 103 according to this embodiment, a surface structure thereof has the $\alpha$ precipitation $\eta$ phase (code 111 in FIG. 3) as explained below, and an average area ratio thereof is 5 to 95%. Further, the balance of such $\alpha$ precipitation $\eta$ phases 111 is a hard phase 113 constituted of the $MgZn_2$ phase, the $\eta/\alpha/MgZn_2$ ternary eutectic phase, the $\eta/MgZn_2$ binary eutectic phase, or the like. Note that the plating layer 103 according to this embodiment contains Mg of 0.50 mass% or more as a chemical composition of plating, so that the hard phase 113 as described above is inevitably formed from such a chemical composition.

The $\alpha$ precipitation $\eta$ phase 111 is a metal structure softened by Al supersaturated and solid-dissolved in a parent phase constituted of the $\eta$-Zn phase (hereinafter, referred to as an "$\eta$ parent phase 123") precipitating as an $\alpha$ phase 121, as schematically illustrated in FIG. 4. When attention is focused on a backscattered electron image in the SEM observation, the $\alpha$ phases 121 are present as black objects, and the $\eta$ parent phase 123 is present as a white object. Therefore, the $\alpha$ precipitation $\eta$ phase 111 is recognized as a structure in which black grains disperse in the white phase in the SEM observation by using the backscattered electron image.

Such $\alpha$ precipitation $\eta$ phases 111 are present in the hard phase 113, thereby causing nonuniformity in hardness as the plating layer 103. Under a situation in which a relatively soft metal structure is present in a hard metal structure, when a strain is applied to the plating layer 103 by being involved in a processing process for processing the plated steel member into a desired shape, a press-joining process in manufacturing the adhesively bonded structure, or the like, the applied strain concentrates on the $\alpha$ precipitation $\eta$ phase 111 which is the soft metal structure.

Further, in the surface structure of the plating layer 103 according to this embodiment, the average area ratio of the $\alpha$ precipitation $\eta$ phase 111 is in a range of 5 to 95% as described above. The average area ratio of the $\alpha$ precipitation $\eta$ phase 111 is in the range as described above, thereby preventing the strain from excessively concentrating on the $\alpha$ precipitation $\eta$ phase 111 even when the strain as described above is applied, so that desired adhesion durability can be achieved.

When the average area ratio is less than 5%, a presence amount of the $\alpha$ precipitation $\eta$ phase 111 is too small, which thus fails to achieve desired adhesion durability. The average area ratio is 5% or more, and thereby the desired adhesion durability can be improved while maintaining corrosion resistance. The average area ratio of the $\alpha$ precipitation $\eta$ phase 111 is preferably 8% or more, and more preferably 15% or more.

On the other hand, when the average area ratio of the $\alpha$ precipitation $\eta$ phase 111 exceeds 95%, soft $\alpha$ precipitation $\eta$ phases occupy most of the plating layer, and thereby the plating layer exhibits ductility overall to make it difficult to achieve adhesion durability as explained below, which is thus undesirable. The average area ratio of the $\alpha$ precipitation $\eta$ phase 111 is 95% or less, and thereby the adhesion durability as explained below can be achieved while maintaining corrosion resistance. The average area ratio of the $\alpha$ precipitation $\eta$ phase 111 is preferably 70% or less, more preferably 40% or less, and further preferably 30% or less.

Note that an improvement effect of adhesion durability caused by the $\alpha$ precipitation $\eta$ phase 111 will be explained in detail below again.

◊ Calculation method of average area ratio of $\alpha$ precipitation $\eta$ phase 111 of plating layer 103

Here, the average area ratio as described above is measured as follows.

That is, an arbitrary position on the surface of the plating layer 103 is observed by the SEM, and element mapping is acquired using the SEM-EPMA. The region corresponding to the $\alpha$ precipitation $\eta$ phases 111 is identified by subjecting the acquired element mapping to thresholding using a thresholding function of a commercially-available image analysis application, and an area ratio thereof is calculated.

In more detail, in a sample obtained in the above manner, a region of 120 $\mu$m $\times$ 100 $\mu$m (corresponding to a magnification of about 1000 times.) in plan view in the arbitrary position on the surface of the plating layer 103 is observed by the SEM, and a point analysis is performed by the SEM-EPMA.

Concretely, the above region of 120 $\mu$m $\times$ 100 $\mu$m is observed at a magnification of 1000 times as an acceleration voltage: 15.0 kV, an irradiation current: 4.999 $\times$ 10$^{-8}$ A, and an irradiation time: 50 milliseconds. After acquiring a backscattered electron image of the focused region under such conditions, the point analysis of the metal structures only needs to be performed for each three points using a contrast of a backscattered electron image.

In such a point analysis, the phase satisfying Al: 20 to 99 atom%, Zn: 0.5 to 80 atom%, and Mg: 0 to 5 atom% and having a total of Al and Zn of 70 atom% or more can be judged the $\alpha$ phase. Further, the phase in which the content of Zn is 98 atom% or more, and the contents of the other elements are 2 atom% or less in total is judged the $\eta$-Zn phase.

Note that the phase in which contents of Mg and Zn are each 10 atom% or more, and a total content of Mg and Zn is 85 atom% or more is judged the hard phase 113 constituted of the $MgZn_2$ phase, the $\eta/\alpha/MgZn_2$ ternary eutectic phase, the $\eta/MgZn_2$ binary eutectic phase, or the like.

Mg is not contained in the $\eta$-Zn phase, whereas the hard phase 113 containing Mg is present around $\eta$-Zn. Thus, a contour line indicating a boundary between the metal structure containing Mg and the metal structure not containing Mg can be identified by focusing on a distribution of the Mg element. The metal structure surrounded by the contour line identified in this manner and not containing Mg can be distinguished as the $\eta$-Zn phase. Here, a person skilled in the art can easily distinguish the $\eta$-Zn phase and the surrounding hard phase 113 by visual recognition.

In a visual field at the time of SEM observation, the contour line of $\eta$-Zn is identified in such a manner as described above, and such a contour line is manually drawn on various image analysis applications (for example, ImageJ and the like). Thereafter, whether a black precipitate corresponding to the $\alpha$ phase is present or not can be easily judged in the $\eta$-Zn phase by subjecting an image to thresholding in the image analysis application. At this time, as a threshold in the thresholding, for example, a Minimum value in Brightness/Contrast only needs to be set to 200.

Next, regarding the $\eta$-Zn phase identified in such a manner as described above, whether the $\alpha$ phase is present in the interior thereof or not is judged. As described above, the $\alpha$ phase is visually recognized as the black precipitate (that is, black grains), whereas the $\eta$-Zn phase is visually recognized as a white parent phase in the observation by using a backscattered electron image. Therefore, the $\alpha$ precipitation $\eta$ phase 111 on which attention is focused in this embodiment is observed as the phase in which the black grains disperse in the white parent phase as schematically illustrated in FIG. 4. Note that in FIG. 4, the contour line indicated by a dotted line corresponds to the contour line of the $\eta$-Zn phase as described above.

Thus, the phase in which the black grains disperse in the white parent phase is identified by the observation by using the backscattered electron image as described above, and the point analysis with the SEM-EPMA is then performed. Attention is focused on one of the phases in each of which the black grains disperse in the white parent phase, and as schematically illustrated in FIG. 4, the point analysis with the SEM-EPMA is performed on an arbitrary size of 5 $\mu$m $\times$ 5$\mu$m including both the black grains and the white parent phase. As a result of the point analysis, a region where the content of Zn is 90 atom% or more, and the content of Al is in a range of 0.05 to 10.00 atom% can be judged the $\alpha$ phase 121 in the $\eta$ parent phase 123. At this time, black phases present around a section judged the $\alpha$ phase only need to be collectively judged the $\alpha$ phase.

The region of the $\alpha$ precipitation $\eta$ phase 111 in the region of 120 $\mu$m $\times$ 100 $\mu$m in plan view in the arbitrary position on the surface of the plating layer 103 can be identified by the method as described above. Thereafter, the area ratio of the identified region only needs to be calculated using various image analysis applications (for example, ImageJ and the like). Concretely, an area of the region corresponding to the $\alpha$ precipitation $\eta$ phases 111 is calculated by the image analysis application, and the acquired area of the $\alpha$ precipitation $\eta$ phase 111 is then divided by an area of the entire visual field, and thereby the area ratio of the $\alpha$ precipitation $\eta$ phase 111 can be acquired in the focused visual field.

The measurement and calculation processing as described above is performed at five arbitrary points, and an average value of the five acquired area ratios is calculated. The average value acquired in this manner is set as the average area ratio of the $\alpha$ precipitation $\eta$ phase 111.

<<Regarding chemical treatment coating layer 105>>

Back to FIG. 2B again, the chemical treatment coating layer 105 which the first member 10 according to this embodiment preferably has will be explained. The chemical treatment coating layer 105 is provided on the surface of the plating layer 103 in the adhesive region as schematically illustrated in FIG. 2B, and is more preferably provided over the entire surface of the plating layer 103. Further, at least a part of the chemical treatment coating layer 105 comes in contact with the adhesive layer 30. This causes the first member 10 to be made to adhere to the second member 20 by the adhesive layer 30 with the chemical treatment coating layer 105 interposed therebetween.

As the chemical treatment coating layer 105 according to this embodiment, for example, various chemical treatment coating layers such as a chromate chemical treatment coating layer, a phosphate-based chromate-free chemical treatment coating layer, and a zirconium-based chromate-free chemical treatment coating layer can be provided.

Among them, a silicon-based chromate-free chemical treatment coating layer as explained below is more preferably provided as the chemical treatment coating layer 105. The adhesion durability of the adhesively bonded structure 1 can be further improved by providing the silicon-based chromate-free chemical treatment coating layer as the chemical treatment coating layer 105. Hereinafter, this silicon-based chromate-free chemical treatment coating layer will be explained in detail.

The silicon-based chromate-free chemical treatment coating layer in a more preferable form as the chemical treatment coating layer 105 contains a silicon compound having at least either a Si-O bond or a Si-OH bond. Such a silicon compound may be an organosilicon compound, or may be an inorganic silicon compound. When the organosilicon compound is contained as the silicon compound, the silicon-based chromate-free chemical treatment coating layer in a more preferable form as the chemical treatment coating layer 105 has at least either the Si-O bond or the Si-OH bond, and a Si-C bond. When the organosilicon compound is contained as the silicon compound, such an organosilicon compound constitutes an organic compound phase. Further, when the inorganic silicon compound is contained as the silicon compound, such an inorganic silicon compound constitutes an inorganic compound phase.

Note that from the viewpoint of simplicity in forming the chemical treatment coating layer 105, the organosilicon compound is preferably a main silicon compound.

The organosilicon compound as described above is not particularly limited as long as it is an organosilicon compound having the Si-C bond, and at least either the Si-O bond or the Si-OH bond. As such an organosilicon compound, for example, an organosilicon compound having a glycidoxy group or a mercapto group is preferably used. Using the organosilicon compound having the glycidoxy group or the mercapto group as the organosilicon compound allows a formation state of a Si-O-Me bond as described in detail below to be achieved in a more preferable state, and enables the adhesion durability to be achieved over a long period.

Note that as the organosilicon compound, other than the organosilicon compound having the glycidoxy group or the mercapto group, an organosilicon compound having, for example, an amino group, a vinyl group, a methacrylic group, or the like can also be present. However, a result of an examination made by the present inventors has revealed that when the organosilicon compound having the amino group, the vinyl group, the methacrylic group, or the like is used, a reaction between the organosilicon compound and a resin constituting an organic resin phase inside the chemical treatment coating layer 105 is promoted more than a reaction at an interface between the steel member 101 and the plating layer 103, and, the chemical treatment coating layer 105, and the adhesion durability over a long period is less likely to be obtained. Consequently, from the viewpoint of achieving the adhesion durability over a long period by preventing penetration of an electrolytic solution such as water, the organosilicon compound having the glycidoxy group or the mercapto group is preferably used. Note that as the organosilicon compound having the glycidoxy group or the mercapto group, a commercially-available organosilicon compound matching conditions may be used, or an organosilicon compound prepared by organic synthesis may be used.

Further, when the silicon-based chromate-free chemical treatment coating layer in a more preferable form as the chemical treatment coating layer 105 contains an inorganic compound, the strength of the chemical treatment coating layer improves to cause adhesive strength to improve. As the inorganic silicon compound constituting the inorganic compound phase, for example, colloidal silica, fumed silica, or the like can be cited.

Furthermore, the silicon-based chromate-free chemical treatment coating layer in a more preferable form as the chemical treatment coating layer 105 at least has an organic resin phase containing one or more kinds of a urethane group, an epoxy group, and an ester group in addition to the above silicon compound. That is, the silicon-based chromate-free chemical treatment coating layer in a more preferable form as the chemical treatment coating layer 105 at least contains at least one or more kinds of the urethane group, the epoxy group, or the ester group, and the silicon compound having at least either the Si-O bond or the Si-OH bond. More concretely, the organic resin phase having a specific functional group as described above is present mainly as resin particles, and has a structure in which such resin particles disperse in the silicon compound phase.

A chemical bond such as Si-O-Me bonds is formed with respect to the elements constituting the first member 10 by the presence of the silicon compound having the bonds as described above in the chemical treatment coating layer 105. Here, Me indicates main metallic elements constituting the first member 10. Concretely, the above Me includes Fe derived from the steel member 101, and Zn, Al, and Mg derived from the plating layer 103. The formation of such a primary bond makes a joining state between the steel member 101 and the plating layer 103, and, the chemical treatment coating layer 105 stronger, resulting in further improvement in adhesiveness between the steel member 101 and the plating layer 103, and, the chemical treatment coating layer 105. As a result, a state where water is less likely to penetrate from the outside into the interface between the steel member 101 and the plating layer 103, and, the chemical treatment coating layer 105 is achieved. This allows the adhesion durability to be improved in the adhesively bonded structure 1 according to this embodiment.

In the silicon-based chromate-free chemical treatment coating layer in a more preferable form as the chemical treatment coating layer 105, a total volume ratio of the organic compound phase and the inorganic compound phase is preferably in a range of 16 vol% to 84 vol% relative to the total volume of the chemical treatment coating layer.

When the total volume ratio of the organic compound phase and the inorganic compound phase is less than 16 vol% relative to the total volume of the chemical treatment coating layer, the Si-O-Me bonds cannot sometimes be sufficiently formed. The total volume ratio of the organic compound phase and the inorganic compound phase is more preferably 20 vol% or more, and further preferably 30 vol% or more.

On the other hand, when the volume ratio of the organic compound phase and the inorganic compound phase is more than 84 vol% relative to the total volume of the chemical treatment coating layer, adhesiveness between the adhesive layer 30 and the chemical treatment coating layer sometimes decreases. The total volume ratio of the organic compound phase and the inorganic compound phase is more preferably 80 vol% or less, and further preferably 70 vol% or less.

Note that when the total volume ratio of the organic compound phase and the inorganic compound phase is determined from a cross section of the chemical treatment coating layer, a total area ratio of the organic compound phase and the inorganic compound phase with respect to a cross-sectional area only needs to be calculated in a cross section at an arbitrary position of the chemical treatment coating layer, and determined as the total volume ratio of the organic compound phase and the inorganic compound phase.

Further, in the silicon-based chromate-free chemical treatment coating layer in a more preferable form as the chemical treatment coating layer 105, a volume ratio of the organic compound phase is preferably in a range of 16 vol% to 84 vol% relative to the total volume of the chemical treatment coating layer.

When the volume ratio of the organic compound phase is less than 16 vol% relative to the total volume of the chemical treatment coating layer, the Si-O-Me bonds cannot sometimes be sufficiently formed. The volume ratio of the organic compound phase is more preferably 20 vol% or more, and further preferably 30 vol% or more.

On the other hand, when the volume ratio of the organic compound phase is more than 84 vol% relative to the total volume of the chemical treatment coating layer, the adhesiveness between the adhesive layer 30 and the chemical treatment coating layer 105 sometimes decreases. The volume ratio of the organic compound phase is more preferably 80 vol% or less, and further preferably 70 vol%.

Note that when the volume ratio of the organic compound phase is determined from the cross section of the chemical treatment coating layer, an area ratio of the organic compound phase with respect to a cross-sectional area only needs to be calculated in a cross section at an arbitrary position of the chemical treatment coating layer, and determined as the volume ratio of the organic compound phase.

Further, in the silicon-based chromate-free chemical treatment coating layer in a more preferable form as the chemical treatment coating layer 105, a volume ratio of the inorganic compound phase is preferably 10 vol% or less relative to the total volume of the chemical treatment coating layer.

When the volume ratio of the inorganic compound phase is more than 10 vol%, the adhesiveness between the steel member 101 and the plating layer 103, and, the chemical treatment coating layer 105 sometimes decreases. Further, in the silicon-based chromate-free chemical treatment coating layer in a more preferable form as the chemical treatment coating layer 105, such a chemical treatment coating layer need not contain the inorganic compound phase, and thus a lower limit thereof is 0 vol%.

When the volume ratio of the inorganic compound phase is determined from the cross section of the chemical treatment coating layer, an area ratio of the inorganic compound phase with respect to a cross-sectional area only needs to be calculated in a cross section at an arbitrary position of the chemical treatment coating layer, and determined as the volume ratio of the inorganic compound phase. An elemental analysis only needs to be performed on the inorganic silicon compound by an EPMA in a cross section at an arbitrary position of the chemical treatment coating layer to determine the inorganic silicon compound from constituent elements thereof, for example.

Further, the volume ratio of the inorganic silicon compound or the organosilicon compound can be determined from the SEM image obtained by observing the cross section thereof with the scanning electron microscope (SEM) after the elemental analysis with the EPMA as described above.

Further, in the silicon-based chromate-free chemical treatment coating layer in a more preferable form as the chemical treatment coating layer 105, the resin particles as one example of the organic resin phase preferably disperse in the organic compound phase. Such a resin particle has one or more kinds of the functional groups of the urethane group, the epoxy group, and the ester group as described above. These functional groups are functional groups also contained in a large amount in a resin constituting an adhesive. Thus, the chemical treatment coating layer contains the resin particles having the functional groups as described above, and thereby the adhesiveness at an interface between the chemical treatment coating layer 105 and the adhesive layer 30 improves. As a result, a state where water is less likely to penetrate from the outside into the interface between the chemical treatment coating layer 105 and the adhesive layer 30 is achieved. This allows the adhesion durability between the chemical treatment coating layer 105 and the adhesive layer 30 to be improved in the adhesively bonded structure 1 according to this embodiment.

Here, the resin particles constituting the organic resin phase as described above are not particularly limited as long as they are the resin particles each having one or more kinds of the functional groups of the urethane group, the epoxy group, and the ester group. Such resin particles may be a water-dispersible water-based resin which disperses in water, may be a solvent-based resin which disperses in an organic solvent, or may be ones using both of them. However, in terms of manufacturing cost and environmental suitability, such resin particles are preferably the water-based resin. Further, the resin constituting the resin particles preferably has a main skeleton including a carbon atom.

As the water-based resin, for example, the water-dispersible resin such as a urethane resin, an epoxy resin, a polyester resin, or a mixed resin of two or more kinds of resins of these can be cited.

When the polyester resin is used as the water-based resin, a molecular weight is preferably 10000 to 30000. When a molecular weight is less than 10000, sufficient processability may be difficult to secure. On the other hand, when a molecular weight exceeds 30000, a bonding site of the resin itself decreases, so that excellent adhesiveness with respect to the adhesive layer 30 may be difficult to secure. Further, when crosslinking is performed using a curing agent such as melamine, a crosslinking reaction is not sufficiently performed, so that performance as the chemical treatment coating layer may decrease.

When the urethane resin is used as the water-based resin, a form of the urethane resin is preferably emulsion in which an emulsion particle size is 10 to 100 nm (more preferably 20 to 60 nm). An excessively small emulsion particle size may cause high costs. On the other hand, An excessively large emulsion particle size makes a gap between emulsions large in being formed into a coating film, so that a barrier property as the chemical treatment coating film may decrease. As a type of the urethane resin, an ether base, a polycarbonate base, an ester base, or the like can be cited. These urethane resins may be used alone, or may be used in combination.

On the other hand, as the solvent-based resin, a polyester resin, a urethane resin, an epoxy resin, a mixed resin of two or more kinds of resins of these, or the like can be cited.

Here, in the silicon-based chromate-free chemical treatment coating layer in a more preferable form as the chemical treatment coating layer 105, the resin contained in the coating layer may be a crosslinked resin having a crosslinked structure, or may be a non-crosslinked resin having no crosslinked structure. As a crosslinking agent (curing agent) which imparts the crosslinked structure to the resin, it is preferable to use melamine, isocyanate, a silane compound, a zirconium compound, a titanium compound, or the like.

An addition amount of the above crosslinking agent is preferably 5 mass fraction to 30 mass fraction relative to a resin solid content of 100 mass fraction. When the addition amount of the crosslinking agent is less than 5 mass fraction, a crosslinking reaction with the resin decreases, so that performance as the coating film may be insufficient. On the other hand, when the addition amount of the crosslinking agent exceeds 30 mass fraction, the crosslinking reaction excessively progresses, and the chemical treatment coating layer excessively hardens, so that processability may decrease. Further, in a case of using the silane compound, the zirconium compound, or the titanium compound as the crosslinking agent, when the addition amount of the crosslinking agent is more than 30 mass fraction, coating material stability may further decrease.

Here, in the silicon-based chromate-free chemical treatment coating layer in a more preferable form as the chemical treatment coating layer 105, whether such a chemical treatment coating layer has at least any of the urethane group, the epoxy group, and the ester group or not can be determined by the following method. Further, the presence/absence of the Si-C bond, the Si-O bond, and the Si-OH bond can also be determined by the following method.

First, by cutting a section where the chemical treatment coating layer 105 of the adhesively bonded structure 1 is disposed by oblique cutting, a cross section thereof is exposed. Subsequently, the obtained cross section is further polished to obtain a cross-sectional sample in a thickness direction of the chemical treatment coating layer 105 of the first member 10. Next, a portion in the chemical treatment coating layer 105 of the obtained cross-sectional sample is analyzed by a micro-infrared spectrometer to obtain an infrared absorption spectrum of the focused cross-sectional sample. In the obtained infrared absorption spectrum, the presence/absence of the above functional groups and bonds is judged based on whether vibration peaks derived from the urethane group, the epoxy group, the ester group, the Si-O bond, the Si-C bond, and the Si-OH bond are observed or not.

Concretely, in the obtained infrared absorption spectrum, when a peak is observed near 910 $cm^{-1}$, the epoxy group is judged as being contained, when peaks are observed near 1550 $cm^{-1}$ and near 1740 $cm^{-1}$, the urethane group is judged as being contained, and when a peak is observed near 1720 to 1740 cm$^{-1}$, the ester group is judged as being contained.

Further, in the obtained infrared absorption spectrum, when a peak is observed near 1250 to 1260 cm$^{-1}$, the Si-C bond is judged as being contained, when a peak is observed near 1000 to 1100 cm$^{-1}$, the Si-O bond is judged as being contained, and when a peak is observed near 3650 to 3690 cm$^{-1}$, the Si-OH bond is judged as being contained.

Note that as long as the chemical treatment coating layer 105 can be sufficiently magnified, a cutting angle in the oblique cutting may be an arbitrary angle.

Here, in the silicon-based chromate-free chemical treatment coating layer in a more preferable form as the chemical treatment coating layer 105, attention is focused on a case where the chemical treatment coating layer 105 is analyzed by a time-of-flight secondary ion mass spectrometry (TOF-SIMS) while performing Ar sputtering from the adhesive layer 30 side toward the steel member 101 side to include an arbitrary point at the interface between the steel member 101 and the plating layer 103, and, the chemical treatment coating layer 105. In such a case, an analysis result as follows is preferably obtained. That is, in the analysis result of the TOF-SIMS, it is preferable that peaks corresponding to the Si-O-Me bonds (Me: Fe, Zn, Al, Mg) are observed, and a count value of the peaks indicating the Si-O-Me bonds is 15 or more. Further, Intensity (a.u.) at a Total Ion correction value (a value obtained by dividing a peak count of the Si-O-Me bonds by a total value of a count number of detected all secondary ions) is preferably $1.0 \times 10^{-3}$ or more. Concretely, the value obtained by dividing the count value of the peaks indicating the Si-O-Me bonds by the total value of the count number of all the secondary ions detected in a mass scan range m/z = 0 to 300 (Total Ion correction value) is preferably $1.0 \times 10^{-3}$ or more.

Here, the peaks corresponding to the Si-O-Me bonds are each observed at a characteristic position for each of such elements Me depending on a specific kind of the element Me. For example, in a case of Me = Fe, a typical peak corresponding to a Si-O-Fe bond is a peak observed at a position of a mass (m/z) $100 \pm 0.1$ in the analysis result of the TOF-SIMS. In a case of Me = Zn, a typical peak corresponding to a Si-O-Zn bond is a peak observed at a position of a mass (m/z) $108 \pm 0.1$ in the analysis result of the TOF-SIMS. In a case of Me = Al, a typical peak corresponding to a Si-O-Al bond is a peak observed at a position of a mass (m/z) $71 \pm 0.1$ in the analysis result of the TOF-SIMS. In a case of Me = Mg, a typical peak corresponding to a Si-O-Mg bond is a peak observed at a position of a mass (m/z) $68 \pm 0.1$ in the analysis result of the TOF-SIMS.

Such an analysis result indicates that a formation reaction of the Si-O-Me bonds efficiently progresses at the interface between the steel member 101 and the plating layer 103, and, the chemical treatment coating layer 105, and the Si-O-Me bonds over a certain amount are formed at the interface between the steel member 101 and the plating layer 103, and, the chemical treatment coating layer 105. The Si-O-Me bonds over a certain amount are formed at the interface between the steel member 101 and the plating layer 103, and, the chemical treatment coating layer 105, thereby allowing water to be prevented from penetrating into the interface between the steel member 101 and the plating layer 103, and, the chemical treatment coating layer 105 to hold the adhesion durability over a longer period even when the adhesively bonded structure 1 is exposed to a wet environment.

The count value indicating the Si-O-Me bonds as described above is more preferably 20 or more, and further preferably 30 or more. The Total Ion correction value is more preferably $1.3 \times 10^{-3}$ or more, and further preferably $2.0 \times 10^{-3}$ or more.

Note that the count value of the peaks corresponding to the Si-O-Me bonds at the interface between the steel member 101 and the plating layer 103, and, the chemical treatment coating layer 105 as described above can be measured as follows.

First, a sample in which a thickness of the adhesive layer 30 is thinned to about 1 μm is manufactured by cutting an adhesively bonded portion between the steel member 101 and the plating layer 103, and, the chemical treatment coating layer 105 to be inclined at five degrees with a surface and interfacial cutting analysis system (SAICAS) from the adhesive layer 30 side toward the steel member 101 side, and using the Ar sputtering in combination. A portion where the thickness of the adhesive layer 30 is thinned to about 1 μm is analyzed by the TOF-SIMS while performing the Ar sputtering from the adhesive layer 30 side toward the steel member 101 side. The TOF-SIMS measurement is performed after the sputtering with Ar beams from the surface to a predetermined depth, and similarly thereafter, the TOF-SIMS measurement is repeatedly performed after performing the Ar sputtering, and a depth direction distribution is acquired with respect to various elements and bonds. A primary ion species is set as Au$^{3+}$, an acceleration voltage is set to 30 kV, a sputter rate is set to about 80 nm/min (SiO$_2$ conversion), and a measurement region is set to 50 μm × 50 μm.

A specific mass number is present for each ion. Thus, a depth direction profile of a theoretical mass number of a target Si-O-Me bond is measured in the above TOF-SIMS measurement. Based on a depth direction profile of a mass corresponding to the Si-O-Me bond, and respective depth direction profiles of Me ions serving as a main component of the metal part and C ions serving as a main component of the resin, a section from a section which is a rising portion of a count value of Me ions and a falling portion of a count value of C ions to where a count number of C ions becomes almost constant is regarded as an interface part. Thereafter, a count value corresponding to the Si-O-Me bonds at such an interface part is measured.

Note that an area ratio of the resin particles, and the count value of the Si-O-Me bonds in the TOF-SIMS as described above can be set in desired ranges by properly adjusting each of selection and contents for and of a material serving as the raw material of the organic resin phase and the material serving as the raw material of the organic compound phase, and properly controlling a surface state of the steel member 101 and the plating layer 103 in forming the chemical treatment coating layer 105 according to this embodiment.

◊ Regarding other components

The chemical treatment coating layer 105 may contain other additive agents other than the above components. As other additive agents, for example, there can be cited well-known additive agents such as oxide particles, an extender, a solid lubricant, an antirust, a leveling agent, a viscosity imparting agent, a anti-settling agent for pigments, and a defoamer.

◊ Regarding average thickness of chemical treatment coating layer 105

In this embodiment, an average thickness of the chemical treatment coating layer 105 as explained above is preferably 0.2 $\mu$m or more per one side of the first member 10. Such an effect as described above caused by providing the chemical treatment coating layer 105 can be surely expressed by setting the average thickness per one side of the chemical treatment coating layer 105 to 0.2 $\mu$m or more. The average thickness per one side of the chemical treatment coating layer 105 is more preferably 0.4 $\mu$m or more, and further preferably 0.5 $\mu$m or more. On the other hand, conductivity to the steel member 101 and the plating layer 103 with the chemical treatment coating layer 105 interposed can be ensured by setting the average thickness per one side of the chemical treatment coating layer 105 to 1.5 $\mu$m or less. This makes it possible to perform electrodeposition coating on the steel member 101 and the plating layer 103 with the chemical treatment coating layer 105 interposed, or perform spot welding on the steel member 101 and the plating layer 103 with the chemical treatment coating layer 105 interposed, for example. The average thickness per one side of the chemical treatment coating layer 105 is more preferably 1.2 $\mu$m or less, and further preferably 1.0 $\mu$m or less.

Note that the average thickness of the chemical treatment coating layer 105 can be measured in the following manner. First, by cutting an arbitrary section where the chemical treatment coating layer 105 of the adhesively bonded structure 1 is disposed in a thickness direction of the chemical treatment coating layer 105, a cross section thereof is exposed. Next, the obtained cross section is further polished to obtain a cross-sectional sample in the thickness direction of the chemical treatment coating layer 105 of the first member 10. Next, a section of the chemical treatment coating layer 105 of the obtained cross-sectional sample is observed by the SEM to obtain an observation image of the cross section of the chemical treatment coating layer 105. A thickness of the chemical treatment coating layer 105 present in a visual field of the obtained observation image is measured at five positions of five equal positions into which the visual field is divided in a width direction, and an average value thereof is calculated. The average thickness of the chemical treatment coating layer 105 is set as the average value of values obtained in the five visual fields. That is, the average thickness of the chemical treatment coating layer 105 is set as an average value of the thicknesses at a total of 25 positions.

The first member 10 in the adhesively bonded structure 1 according to this embodiment has been explained in detail above.

<Regarding second member 20>

In the adhesively bonded structure 1 according to this embodiment, a material of the second member 20 in at least the adhesive region is not particularly limited, but as the material, various metal members may be used, or various non-metal members may be used.

When the metal member is used as the second member, for example, iron, titanium, aluminum, magnesium, alloys of them, or the like can be cited as a material thereof. Here, as examples of the alloys, for example, iron-based alloys (including stainless steel.), Ti-based alloys, Al-based alloys, Mg alloys, and the like can be cited. The material of the metal member is preferably steel materials (steel products), the iron-based alloys, titanium, and aluminum, and more preferably steel materials having higher tensile strength as compared with other metal species. Such steel materials include, for example, steel materials standardized by Japanese Industrial Standards (JIS) or the like, and there can be cited carbon steel, alloy steel, high-tension steel which are used as general structure use and machine structure use, and the like. As concrete examples of such steel materials, there can be cited a cold-rolled steel material, a hot-rolled steel material, a hot-rolled steel sheet material for automobile structure, a hot-rolled high-tension steel sheet material for automobile manufacturing, a cold-rolled steel sheet material for automobile structure, a cold-rolled high-tension steel sheet material for automobile manufacturing, a high-tension steel material, commonly called a hot stamping material, quenched during hot working, and the like. Components of such steel materials are not particularly limited, but they may contain one kind or two or more kinds of Si, Mn, S, P, Al, N, Cr, Mo, Ni, Cu, Ca, Mg, Ce, Hf, La, Zr, and Sb in addition to Fe and C. One kind or two or more kinds of these optional additive elements can be appropriately selected and their contents can also be appropriately adjusted to obtain required material strength and formability.

When the material of the metal member is the steel material, optional surface treatment may be performed on the steel material. Here, as the surface treatment, for example, there can be cited various kinds of plating treatment such as zinc-based plating, aluminum-based plating, and tin-based plating, conversion treatment such as zinc phosphate treatment, chromate treatment, and chromate-free treatment, and physical surface roughening treatment such as sandblasting or chemical surface roughening treatment such as chemical etching, but these are not restrictive. Further, a plurality of kinds of surface treatment may be performed. Treatment aiming to impart at least a rust prevention property is preferably performed as the surface treatment.

In particular, among the steel materials, the plated steel member subjected to plating treatment is preferable as the material of the second member 20 because it is excellent in corrosion resistance. As particularly preferable plated steel members as the material of the second member 20, there can be cited a zinc-plated steel sheet, a Ni plated steel sheet or an alloyed Ni plated steel sheet alloyed by subjecting these to heat treatment to diffuse Fe during Ni plating, an Al plated steel sheet, a tin plated steel sheet, a chrome plated steel sheet, and the like.

Among various plated steel sheets as described above, the zinc-plated steel sheet is suitable as the material of the second member 20 because it is excellent in corrosion resistance. In particular, an alloyed hot-dip galvanized steel sheet alloyed after galvanizing a steel sheet to diffuse iron during the galvanization is preferable as the material of the second member 20 because a decrease in strength due to aging of an adhesive is more suppressed.

Consequently, as the material of the second member 20, an alloyed hot-dip galvanized steel sheet with high strength, for example, an alloyed hot-dip galvanized steel sheet with a tensile strength of 980 MPa or more is preferably used, and an alloyed hot-dip galvanized steel sheet with a tensile strength of 1180 MPa or more is more preferably used. This makes it possible to further increase adhesive strength between the first member 10 and the second member 20. In this case, when the adhesively bonded structure 1 is subjected to stress, the entire adhesive layer 30 can be subjected to stress, so that it becomes possible to further obtain an effect of the adhesion durability in the adhesively bonded structure according to this embodiment. Note that the tensile strength of the steel sheet can be measured in accordance with JIS Z2241:2011.

The hot-dip galvanized steel sheet and the alloyed hot-dip galvanized steel sheet will be explained in detail below.

As the steel sheet which is a base metal of the hot-dip galvanized steel sheet and the alloyed hot-dip galvanized steel sheet, a generally known steel sheet can be used. As such a steel sheet, for example, hot-rolled mild steel sheet and steel strip listed in JIS G3131:2018, hot-rolled steel sheet and steel strip for automobile listed in JIS G3113:2018, cold-rolled steel sheet and steel strip listed in JIS G3141:2017, and the like can be used. It is as described above that as the steel sheet serving as the base metal, a high-strength steel sheet to be used for an automobile use or the like is more suitably used, and a high-strength steel sheet with a tensile strength of 980 MPa or more, and furthermore, a high-strength steel sheet with a tensile strength of 1180 MPa or more is further suitably used.

Further, as the material of the second member 20, the plated steel sheet having the steel member and the plating layer as explained in the above first member 10 may be used, or as the material of the second member 20, the same one as the material of the above first member 10 (that is, the plated steel sheet having the steel member 101, the plating layer 103, and the chemical treatment coating layer 105) may be used.

Further, as the material of the second member 20, a surface-treated metal member in which the same one as the chemical treatment coating layer 105 as explained in the above first member 10 is formed with respect to various metal members as described above may be used.

Furthermore, in the adhesively bonded structure 1 according to this embodiment, as the material of the second member 20, various non-metal members such as various resin materials, fiber reinforced plastics (FRP) compounded by containing reinforcing fibers in a matrix resin, and a ceramic material can also be used. Here, as the reinforcing fibers to be used in the fiber reinforced plastics, glass fibers, carbon fibers, and the like can be cited.

The second member 20 in the adhesively bonded structure 1 according to this embodiment has been explained in detail above.

<Regarding adhesive layer 30>

In the adhesively bonded structure 1 according to this embodiment, the adhesive layer 30 is disposed between the first member 10 and the second member 20, and makes the first member 10 and the second member 20 adhere to each other in the adhesive region.

The adhesive layer 30 is mainly constituted of an adhesive. The above effect caused by the first member 10 is not impaired depending on the kind of the adhesive constituting the adhesive layer 30. Thus, the adhesive capable of being used for the adhesive layer 30 is not particularly limited, but for example, an epoxy resin-based adhesive, a polyester resin-based adhesive, a urethane resin-based adhesive, and the like, and, adhesives in which rubber or elastomer is mixed in these adhesives, an adhesive to which conductivity is imparted, and the like can be used. Among the above ones, from the viewpoint of initial adhesive strength, the adhesive layer 30 preferably contains the epoxy resin-based adhesive or the urethane resin-based adhesive (that is, a thermosetting adhesive).

Further, a resin of the adhesive constituting the adhesive layer 30 preferably has a chemical structure common to at least one of the resins in the chemical treatment coating layer 105 when the first member 10 according to this embodiment has the chemical treatment coating layer 105. This can make initial adhesiveness between the adhesive layer 30 and the chemical treatment coating layer 105 further excellent, and can further increase adhesive strength of the adhesively bonded structure 1.

For example, the resin of the adhesive constituting the adhesive layer 30 may have a main skeleton common to at least one of the resins in the chemical treatment coating layer 105. Alternatively, the resin of the adhesive constituting the adhesive layer 30 may have a side chain functional group common to at least one of the resins in the chemical treatment coating layer 105.

The adhesive layer 30 in the adhesively bonded structure 1 according to this embodiment has been explained in detail above.

<Regarding adhesion length in adhesively bonded structure 1>

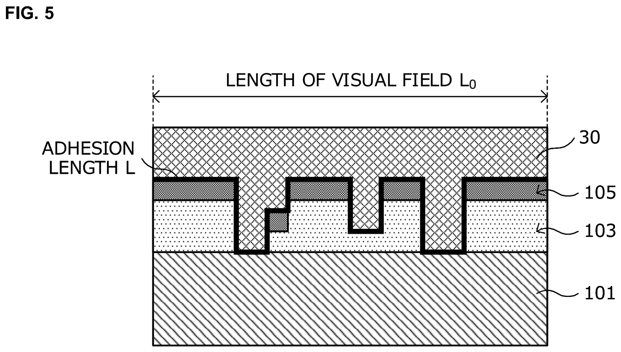

Next, an adhesion length in the adhesively bonded structure 1 according to this embodiment will be explained with reference to FIG. 5. FIG. 5 is an explanatory view for explaining an adhesion length in the adhesively bonded structure according to this embodiment.

In the adhesively bonded structure 1 according to this embodiment, attention is focused on a case of observing a cross section in which the first member 10, the second member 20, and the adhesive layer 30 are cut in a lamination direction with an electron microscope (in more detail, SEM) at an arbitrary position in a portion where the first member 10 and the second member 20 are joined with the adhesive layer 30 interposed therebetween. Here, a size of an observation visual field is set to 130 $\mu$m $\times$ 100 $\mu$m, and an observation position is determined so that an interface between the steel member 101 and the plating layer 103 (including the chemical treatment coating layer 105 when the chemical treatment coating layer 105 is present.) in the first member 10, and, the adhesive layer 30 is present in the visual field.

In such an observation, a total of lengths in which the plating layer 103 or the steel member 101, and the adhesive layer 30 come in contact with each other is represented as an adhesion length L. Further, when the chemical treatment coating layer 105 is present, a total of lengths in which the chemical treatment coating layer 105, the plating layer 103 or the steel member 101, and the adhesive layer 30 come in contact with each other is represented as an adhesion length L. In an example illustrated in FIG. 5, a length of a line segment indicated by a thick line corresponds to the adhesion length L. Further, in such a observation, a length of the observation visual field in a direction orthogonal to the surface normal direction of the steel member 101 (that is, 130 $\mu$m) is represented as $L_0$.

In the adhesively bonded structure 1 according to this embodiment, a ratio $L/L_0$ of the two lengths is 1.10 or more. That the ratio $L/L_0$ is 1.10 or more means that the adhesion length L is longer than the length $L_0$ of the observation visual field. That such a state is achieved indicates that surfaces of the plating layer 103 and the chemical treatment coating layer 105 are not flat, but undulations are present. The reason why such a state is achieved is not clear, but the reason is presumed as follows.

That is, the plating layer 103 which the first member 10 according to this embodiment has is in a state where the $\alpha$ precipitation $\eta$ phases 111 which is a soft structure disperse in the hard phase 113 as explained earlier. In a case of aiming to manufacture the adhesively bonded structure 1 using such a first member 10, a strain is considered to be applied to the plating layer 103 in a process of manufacturing the first member 10, a process of processing the first member 10 into a desired shape so that an intended shape of the adhesively bonded structure 1 can be achieved, a process of applying the adhesive to the first member 10 and press-joining it to the second member 20, or the like. The strain applied in such processes concentrates on the $\alpha$ precipitation $\eta$ phase 111 which is a relatively soft structure. As a result, a crack (break) is considered to be generated in the hard phase 113 with the $\alpha$ precipitation $\eta$ phase 111 being as a starting point. It is presumed that a so-called anchoring effect is expressed and the above ratio $L/L_0$ is achieved by the crack generated in this manner. That is, that the plating layer 103 of the first member 10 which is one of the structural members of the adhesively bonded structure 1 according to this embodiment has the $\alpha$ precipitation $\eta$ phase 111 in a specific presence amount (that is, an average area ratio) is said to be an important factor in terms of achieving the ratio $L/L_0$ as described above.

That the above ratio $L/L_0$ is 1.10 or more means that the anchoring effect as described above is expressed in the adhesively bonded structure 1 according to this embodiment. The adhesively bonded structure 1 in which such a ratio $L/L_0$ is achieved exhibits excellent adhesion durability by the anchoring effect.

When the ratio $L/L_0$ is less than 1.10, the anchoring effect as described above is not sufficiently expressed, and the adhesively bonded structure fails to exhibit excellent adhesion durability. In the adhesively bonded structure 1 according to this embodiment, the ratio $L/L_0$ is preferably 1.30 or more, and more preferably 1.60 or more.

On the other hand, an upper limit value of the ratio $L/L_0$ is not particularly specified, but is desirable to be as large as possible, and about 1000.00 is a practical upper limit.

Here, in measuring the above adhesion length L, the observation with the SEM only needs to be performed in the same manner as the observation method of the metal structure of the plating layer 103. In such a observation, attention is focused on such a region with a size of 130 μm in width × 100 μm in height as fits the adhesive layer 30 to the full width of the visual field, and the sum total of the lengths in which the steel member 101, the plating layer 103 or the chemical treatment coating layer 105, and the adhesive layer 30 come in contact with each other in such a region is measured using a dimensional measurement tool attached to the SEM, or the like. The measurement processing as described above is performed at five arbitrary points to calculate an average of the five acquired measured values. The average value obtained in this manner is set as the adhesion length L.

Note that in the above explanation of the adhesion length L, the adhesively bonded structure 1 having a laminated structure illustrated in FIG. 2B is cited as an example, but in a case of the adhesively bonded structure 1 having a laminated structure as illustrated in FIG. 2A, the adhesion length L is a total of the lengths in which the plating layer 103 or the steel member 101, and the adhesive layer 30 come in contact with each other.

The adhesively bonded structure 1 according to this embodiment has been explained in detail with reference to FIG. 1 to FIG. 5 above.

Note that in the above embodiment, a case where the first member 10 and the second member 20 are made to adhere to each other by only the adhesive layer 30 has been explained, but the present invention is not limited to this, and the adhesive bonding by using the adhesive layer and the other joining method (a second joining) can be combined.

The second joining capable of combining with the adhesive bonding is not particularly limited, but an optional joining method can be adopted. As such a joining method, fusion joining, non-fusion joining, mechanical joining, and the like can be concretely cited.

As the fusion joining, for example, spot welding, arc welding, laser welding, or the like can be used. The fusion joining can be applied to a case where the second member 20 has a portion constituted of the metal member. Note that the fusion joining may be performed after removing the adhesive layer, but can be performed without removing the adhesive layer when the adhesive layer has conductivity.

As the non-fusion joining, for example, friction stir welding, diffusion bonding, pressure welding, or the like can be cited. As the mechanical joining, for example, rivet connection or connection by using screws can be cited.

(Regarding manufacturing method of adhesively bonded structure)

An example of a manufacturing method of the adhesively bonded structure according to this embodiment will be explained below.

<Regarding manufacturing method of first member 10>

First, an example of a manufacturing method of the first member 10 will be explained.

The plated steel member constituting the first member 10 according to this embodiment and having the laminated structure as illustrated in FIG. 2B is manufactured by using the steel member 101 as described above as the base metal, forming the plating layer 103 on a surface of such a steel member 101, and then forming the chemical treatment coating layer 105 on a surface of the plating layer 103 using a predetermined chemical treatment agent.

Further, in manufacturing the adhesively bonded structure 1 according to this embodiment, in order to achieve the ratio $L/L_0$ as described above, it is important to apply the strain to the plating layer 103 in the process of manufacturing the first member 10, the process of processing the first member 10 into the desired shape so that the intended shape of the adhesively bonded structure 1 can be achieved, the process of applying the adhesive to the first member 10 and press-joining it to the second member 20, or the like, as explained earlier. An explanation is made below by citing a case of intentionally applying the strain in manufacturing the first member 10 as an example.

Here, in addition to the hot-dip plating method, a thermal spraying method, a cold spraying method, a sputtering method, a vapor deposition method, an electroplating method, and the like can be applied to the formation of the plating layer 103 on the steel member 101. However, the hot-dip plating method is the most preferable in terms of cost to form a plating layer with a generally used level of thickness for automobiles and the like.

A specific heat treatment process as explained below is performed on the plated steel member obtained by the above method (the steel member 101 having the plating layer 103). This causes the α precipitation η phase 111 to be formed in the plating layer 103. Thereafter, the strain is applied to the plated steel member having undergone the heat treatment process by various methods, and thereby it is presumed that the crack which is a factor for achieving the ratio $L/L_0$ as described above is generated.

Thereafter, the chemical treatment coating layer 105 is formed on the surface of the plating layer 103 by applying the predetermined chemical treatment agent to the surface of the formed plating layer 103, and drying and solidifying such a chemical treatment agent. Here, drying and solidification conditions of the chemical treatment agent are not particularly specified, but a temperature and a treatment time at and during which a solvent can vaporize only need to be appropriately set according to the solvent constituting the chemical treatment agent. For example, a drying and solidification time only needs to be not less than 5 seconds nor more than 30 minutes under a temperature condition of not less than 80°C nor more than 250°C.

Note that when the chemical treatment agent is applied after applying the strain to the plating layer 103, a case where the crack probably caused by applying the strain is fulled with the chemical treatment agent can be a concern. However, it is considered difficult that all the cracks probably caused are filled completely within an average thickness of the chemical treatment coating layer 105 as explained earlier, and the anchoring effect as explained earlier is considered to be expressed.

Hereinafter, an example of the manufacturing method for obtaining the plated steel member serving as the material of the first member 10 according to this embodiment using the hot-dip plating method will be explained in detail.

In the manufacturing process for such a plated steel sheet, first, the steel member 101 used as the base metal is rolled by a Sendzimir method to a desired sheet thickness, then coiled and installed in a hot-dip plating line.

In the hot-dip plating line, the steel sheet is continuously passed while uncoiled from a coil. Thereafter, the steel sheet is subjected to heat reduction treatment at 800°C in a $N_2$-5% $H_2$ gas atmosphere under an environment less likely to cause the oxidation, in which an oxygen concentration is 20 ppm or less, and is thereafter air-cooled with a $N_2$ gas to around a bath temperature of the plating bath at a subsequent stage + 20°C by an annealing facility provided on the line, to be immersed in the plating bath, for example.

Here, a plating alloy in a molten state, having the above chemical components, is prepared in the plating bath. The bath temperature of the plating bath is set to equal to or more than the melting point (for example, about 400 to 500°C) of the plating alloy.

In preparing a material for the plating alloy, pure metal (purity of 99% or higher) is preferably used and prepared as the alloy material. First, predetermined amounts of the alloy metals are mixed to obtain the composition of the above plating layer, and completely melted into an alloy using a highfrequency induction furnace, an arc furnace, or the like under vacuum or inert gas replacement conditions. Furthermore, the alloy by being mixed in the predetermined components (composition of the above plating layer) is melted in the air, and the obtained melt is used as the plating bath.

Note that there is no particular restriction on using pure metals in the preparation of the plating alloys as described above, and existing Zn alloys, Mg alloys, and Al alloys may be melted and used. At this time, there is no problem as long as even a predetermined composition alloy with few impurities is used.

After the steel member is immersed in the plating bath as described above, it is pulled up at a predetermined speed. At this time, a plating coating weight is controlled by, for example, a $N_2$ wiping gas so that the plating layer 103 to be formed has the desired thickness. Here, as conditions other than the bath temperature, general plating operation conditions only need to be applied, and special facilities and conditions are unnecessary.

Subsequently, a first cooling process and a second cooling process as described below are performed on the plating alloy in a molten state located on the steel sheet to make the plating alloy in the molten state into the plating layer 103, and to form the $\alpha$ precipitation $\eta$ phase 111 in the plating layer 103. The first cooling process and the second cooling process are explained in detail below.

The first cooling process is a cooling process which is performed when the temperature of the plating alloy is in a range of the bath temperature or less to 240°C or more. In such a first cooling process, the plated steel member in the temperature range as described above is rapidly cooled at an average cooling rate of 15.0°C/second or more. Here, when such an average cooling rate is less than 15.0°C/second, a concentration of Al solid-dissolved in the $\eta$ phase decreases, and driving force of $\alpha$ phase precipitation thereafter in the $\eta$ phase is insufficient, resulting in making the formation of the $\alpha$ precipitation $\eta$ phase difficult. This prevents the crack from being generated when the strain is applied, and the adhesion length as described above cannot be achieved. Note that when the hot-dip plating method is employed in the plating process, such a first cooling process is performed from immediately after the steel member comes out of the plating bath. This causes Al to be solid-dissolved in the $\eta$-Zn phase during solidification.

Here, the above average cooling rate is preferably 25.0°C/second or more. Further, an upper limit value of the average cooling rate is not particularly specified, but for example, about 90.0°C/second is a practical upper limit.

Thereafter, when the temperature of the plating alloy (plating layer) is in a range of less than 240°C to 70°C or more, the second cooling process is performed. The plated steel sheet in the temperature range as described above is slowly cooled at an average cooling rate of 1.0°C/second or less in the second cooling process. Here, when such an average cooling rate exceeds 1.0°C/second, a time when the $\alpha$ phase precipitates from the interior of the $\eta$ phase cannot be ensured, which makes the formation of the $\alpha$ precipitation $\eta$ phase difficult. This causes Al solid-dissolved in the $\eta$-Zn phase in the first cooling process to precipitate as the $\alpha$ phase, and thereby the $\eta$-Zn phase is softened and becomes the $\alpha$ precipitation $\eta$ phase 111, and the hard phase 113 is present around the $\alpha$ precipitation $\eta$ phases 111. Here, the above average cooling rate is preferably 0.5°C/second or less.

As described above, the $\alpha$ precipitation $\eta$ phase 111 can be formed at a desired average area ratio in the plating layer 103 by undergoing such a two-stage cooling process as rapid cooling in the temperature range of the bath temperature or less to 240°C or more, and slow cooling in the temperature range of less than 240°C to 70°C or more.

Note that a cooling state from 70°C to room temperature is not particularly specified, but the cooling only needs to be performed to room temperature by various methods.

Here, an interval between an end of the first cooling process and a start of the second cooling process is preferably within three seconds, and the second cooling process is preferably started immediately after the end of the first cooling process. When the interval between the end of the first cooling process and the start of the second cooling process exceeds three seconds, an unintended cooling process occurs and a desired $\alpha$ precipitation $\eta$ phase 111 cannot be formed.

Note that when one of the first cooling process and the second cooling process as described above is not performed, the desired $\alpha$ precipitation $\eta$ phase 111 cannot be achieved. Performing both the first cooling process and the second cooling process as described above allows the $\alpha$ precipitation $\eta$ phase 111 to be formed at a desired average area ratio in the plating layer 103 and the hard phase to be properly introduced into the plating layer 103.

Further, when an alloying heat treatment process (for example, a heat treatment process involving heating to an ultimate sheet temperature of about 480 to 550°C), which is often performed in the manufacture of alloyed hot-dip galvanized steel members in general, is performed after the above second cooling process, a state of the $\alpha$ precipitation $\eta$ phase 111 controlled by the first cooling process and the second cooling process is disrupted, resulting in failing to obtain such a hydrogen desorption property as attention is focused on in this embodiment. From such a viewpoint, it is important not to perform the heat treatment process after the second cooling process.

Here, for the cooling treatment as described above, a generally known method such as $N_2$ gas cooling, mist cooling, or submergence can be applied. Further, in addition to a $N_2$ gas, other gases with high heat removal effects such as a He gas and a hydrogen gas may be used as the cooling gas.

Note that as an actual measurement method of the temperature of the plating layer, for example, a contact-type thermocouple (K-type) only needs to be used. By attaching the contact-type thermocouple to the steel member serving as the base metal, the average temperature of an entire plating layer can be constantly monitored. Also, by mechanically controlling various speeds and thicknesses, and by standardizing various operating conditions such as a preheating temperature of the steel member and the temperature of the plating bath, the temperature of the entire plating layer at that point under such manufacturing conditions can be monitored almost accurately. This makes it possible to precisely control the cooling treatment in the first cooling process and the second cooling process. Note that the surface temperature of the plating layer may also be measured by a non-contact radiation thermometer, although this is not as accurate as the contact type.

Further, a relationship between the surface temperature of the plating layer and the average temperature of the entire plating layer may be determined by a simulation of performing a heat conduction analysis. Concretely, the surface temperature of the plating layer and the average temperature of the entire plating layer are determined based on various manufacturing conditions, such as the preheating temperature of the steel member, the temperature of the plating bath, the pulling-up speed of the steel member from the plating bath, the thickness of the steel member, the layer thickness of the plating layer, a heat quantity of heat exchange between the plating layer and the manufacturing facility, and a heat release amount of the plating layer. Thereafter, the obtained results only need to be used to determine the relationship between the surface temperature of the plating layer and the average temperature of the entire plating layer. This makes it possible to estimate the average temperature of the entire plating layer at that time under the manufacturing conditions by actually measuring the surface temperature of the plating layer during the manufacturing of the plated steel member. As a result, the cooling treatment in the first cooling process and the second cooling process can be precisely controlled.

Next, the strain is applied to the plated steel member obtained in the above manner. Here, a method for applying the strain is not particularly limited, but a bending-stretching deformation process with a tension leveler, a rolling process with a skin pass rolling mill, a cold press process in processing the plated steel member into a desired shape, or the like only needs to be performed.

Here, the strain at a total stretching ratio of 0.2% or more is preferably applied to the plated steel member in the above process for the application of the strain. The ratio $L/L_0$ as described above can be surely achieved by applying the strain corresponding to such a total stretching ratio. Here, a total stretching ratio $R_{TOTAL}$ (unit: %) is a value determined by the following formula (101). Note that in the following formula (101), $L_A$ is a length in sheet passing direction (unit: m) of an arbitrary section in sheet passing direction X in the plated steel member before the process for the application of the strain is performed, and $L_B$ is a length in sheet passing direction of a portion derived from the arbitrary section in sheet passing direction X in the plated steel member after the process for the application of the strain is performed. Note that the above total stretching ratio is more preferably 0.6% or more.

$$R_{TOTAL}\ (\%) = \{(L_B - L_A)/L_A\} \times 100 \cdots (101)$$

Further, an upper limit value of the above total stretching ratio $R_{TOTAL}$ is not particularly specified, but about 1.5% is a practical upper limit.

Note that the above process for applying the strain can be performed at an arbitrary timing, and may be performed immediately after undergoing the above two-stage cooling process, or may be performed after a certain degree of time elapses after completing the two-step cooling process. In the plated steel member according to this embodiment, the $\alpha$ precipitation $\eta$ phase 111 is formed at the desired average area ratio in the plating layer 103 by undergoing the above two-stage cooling process, so that the process for applying the strain is performed at an arbitrary timing as long as it is after undergoing the two-stage cooling process, thereby making it possible to achieve the ratio $L/L_0$ as described above.

Thereafter, the chemical treatment coating layer 105 is formed on the surface of the plating layer 103 using a desired chemical treatment agent. As a process for forming the chemical treatment coating layer 105, for example, there can be cited chromate treatment, phosphate treatment, chromate-free treatment using a silicon-based, zirconium-based, or the like chromate-free chemical treatment agent, and the like.

Examples of the chromate treatment include electrolytic chromate treatment which forms a chromate film by electrolysis, reactive chromate treatment which forms a film by using reaction with a material and then washes off an excess treatment solution, coating-type chromate treatment which forms a film by applying a treatment solution and drying it without water washing, and the like, and any of the chromate treatments may be used.

As the electrolytic chromate treatment, there can be exemplified the electrolytic chromate treatment using, for example, chromic acid, silica sol, resin (phosphoric acid resin, acrylic resin, vinylester resin, vinyl acetate acrylic emulsion, carboxylated styrene butadiene latex, diisopropanolamine modified epoxy resin, and the like), and hard silica.

As the phosphate treatment, for example, zinc phosphate treatment, calcium zinc phosphate treatment, manganese phosphate treatment, and the like can be exemplified.

The chromate-free treatment is particularly suitable because it does not place a burden on the environment. Such chromate-free treatment includes electrolytic chromate-free treatment which forms a chromate-free film by electrolysis, reactive chromate-free treatment which forms a film by using reaction with a material and then washes off an excess treatment solution, coating-type chromate-free treatment which forms a film by applying a treatment solution and drying it without water washing, and the like, and any of the chromate-free treatments may be used.

Further, as the chemical treatment agent for such chromate-free treatment, the chemical treatment agent containing the silicon compound as explained earlier is preferably used.

The first member 10 according to this embodiment can be manufactured by undergoing the processes as described above.

Note that a case of applying the strain after forming the plating layer 103 and thereafter applying the chemical treatment agent has been explained in the above explanation, and the application of the strain as described above may be performed on the steel member 101 including the chemical treatment coating layer 105 and the plating layer 103 after forming the plating layer 103 and then forming the chemical treatment coating layer 105 using the chemical treatment agent.

<Regarding manufacturing method of second member 20>

A manufacturing method of the second member 20 according to this embodiment is not particularly specified, but an appropriate manufacturing method only needs to be appropriately selected depending on a material to be used as the second member 20.

<Regarding forming process of first member 10 and second member 20>

In a manufacturing method of the adhesively bonded structure 1 according to this embodiment, the first member 10 and the second member 20 are subjected to forming process into a desired shape as necessary. Here, a forming process method is not particularly limited, but a processing means for obtaining a shape of a target molded product only needs to be selected from well-known metal processing methods. Further, a part of such a forming process and a later-described adhesive bonding process may be performed at the same time as necessary.

<Regarding adhesive bonding method>

When the manufactured first member 10 and second member 20 are made to adhere to and joined to each other using a predetermined adhesive, first, a desired adhesive is put on a portion to be made to adhere in the obtained first member 10 and second member 20 (for example, the flange portion or the like) to form the adhesive region. Thereafter, the first member 10 and the second member 20 are laminated with such an adhesive region interposed therebetween, and the adhesive is then cured by performing heat treatment. Here, a method of putting the desired adhesive is not particularly limited, but the desired adhesive only needs to be applied, or a desired adhesive resin sheet only needs to be disposed. This makes it possible to obtain the adhesively bonded structure 1 according to this embodiment in which the first member 10 and the second member 20 are made to adhere to and joined to each other with the adhesive layer 30 interposed therebetween.

Further, when various fiber reinforced plastics or the like are used as the second member 20, the adhesively bonded structure 1 can be obtained by warm forming the first member 10 and the fiber reinforced plastic as the second member 20, or the like in a state of laminating them with the adhesive interposed therebetween.

The example of the manufacturing method of the adhesively bonded structure according to this embodiment has been concretely explained above.

EXAMPLES

Hereinafter, the adhesively bonded structure according to the present invention will be concretely explained while showing examples and comparative examples. Note that the examples shown below are only one example of the adhesively bonded structure according to the present invention, and the adhesively bonded structure according to the present invention is not limited to the examples shown below.

<Manufacture of first member>

[Manufacture of plated steel sheet]

A plated steel sheet was used as an example of a plated steel member below. Cold-rolled steel sheets a to e, a sheet thickness of each of which was 1.6 mm, were used for plating substrates (any of which was manufactured by Nippon Steel Corporation). Chemical compositions of the cold-rolled steel sheets are as follows, and the balance is Fe and impurities.

The cold-rolled steel sheets a: 0.04 mass% C-0.40 mass% Si-2.20 mass% Mn

b: 0.09 mass% C-0.40 mass% Si-2.20 mass% Mn
c: 0.20 mass% C-0.80 mass% Si-2.20 mass% Mn
d: 0.25 mass% C-0.40 mass% Si-2.40 mass% Mn
e: 0.35 mass% C-0.70 mass% Si-2.40 mass% Mn

Regarding each of the cold-rolled steel sheets a to e, a JIS No. 13B specimen was collected from an arbitrary position of each cold-rolled steel sheet based on JIS Z 2241: 2011, and a tensile strength was measured by a commercially available tensile tester. As a result, the tensile strengths of the cold-rolled steel sheets a to e were 590 MPa (cold-rolled steel sheet a), 980 MPa (cold-rolled steel sheet b), 1180 MPa (cold-rolled steel sheet c), 1470 MPa (cold-rolled steel sheet d), 2500 MPa (cold-rolled steel sheet e) respectively. Note that when a sample was collected from a manufactured adhesively bonded structure by the method as described previously, and a specimen was collected from such a sample, a heating process for curing an adhesive is considered to be performed in manufacturing the adhesively bonded structure. Thus, in the sample of the steel member collected from the adhesively bonded structure, the steel member can cure by heating due to the heating process for such adhesive curing, and can have a higher strength than the tensile strength exhibited by the steel sheet before manufacturing the adhesively bonded structure. However, the tensile strength exhibited by the sample collected from the manufactured adhesively bonded structure is presumed to obtain almost the same result as the tensile strengths when the specimens are collected from the cold-rolled steel sheets as described above.

The above plating substrates were each cut into a size of 100 mm × 200 mm, and then plated by a batch-type hot-dip plating test apparatus manufactured in-house, and a plurality of plated steels having compositions of plating layers in Table 1 were prepared with respect to standards. A sheet temperature was measured using a thermocouple spot-welded at the center of each plating substrate. A surface of the plating substrates was subjected to heat reduction treatment at 800°C in a $N_2$-5% $H_2$ gas atmosphere in a furnace with the oxygen concentration of 20 ppm or less before immersion in plating baths. After the heat reduction treatment, the plating substrates were air-cooled with a $N_2$ gas, and immersed in the plating baths with bath temperatures listed in Table 1 for about three seconds after a temperature of the immersed sheets reached the bath temperature + 20°C.

After the immersion in the plating baths, the steel sheets were each pulled up at a rate of 20 to 200 mm/second. At the time of pulling-out, a $N_2$ wiping gas was used to control a plating coating weight. After pulling out the steel sheets from the plating baths, cooling from the plating bath temperature to room temperature was performed under the conditions listed in Table 1.

Note that samples each cut into 30 mm × 30 mm were collected from the plated steel sheets, and a surface of each obtained sample was observed by a SEM in accordance with the method explained earlier, and an average area ratio of an α precipitation η phase was calculated. Thereafter, the samples after a SEM observation were immersed in a 10% HCl aqueous solution with an inhibitor added to pickle and peel the plating layers, and thereafter the compositions of the plating layers were each measured by ICP analysis of the elements dissolved in the aqueous solution. Note that even when a sample was collected from the manufactured adhesively bonded structure by the method as described previously to analyze such a sample, the similar result is presumed to be obtained.

The samples of the obtained plated steel sheets were rolled using a skin pass rolling mill so as to have total stretching ratios listed in Table 1 below, and thereby a strain was applied to the plating layers.

[Formation of chemical treatment coating layer]

The following six kinds of chemical treatment agents were prepared for formation of chemical treatment coating layers.

(A1) a water-dispersion emulsion-type polyurethane resin SF-150 manufactured by DKS Co., Ltd. and 3-glycidoxypropyltriethoxysilane were compounded at a ratio of 3:2 in a solid content volume ratio to be set as a chemical treatment agent A1.

(A2) The water-dispersion emulsion-type polyurethane resin SF-150 manufactured by DKS Co., Ltd. and 3-glycidoxypropyltriethoxysilane were compounded at a ratio of 5:1 in a solid content volume ratio to be set as a chemical treatment agent A2.

(A3) The water-dispersion emulsion-type polyurethane resin SF-150 manufactured by DKS Co., Ltd.and 3-glycidoxypropyltriethoxysilane were compounded at a ratio of 1:5 in a solid content volume ratio to be set as a chemical treatment agent A3.

(A4) The water-dispersion emulsion-type polyurethane resin SF-150 manufactured by DKS Co., Ltd. and 3-mercaptopropyltrimethoxysilane were compounded at a ratio of 1:5 in a solid content volume ratio to be set as a chemical treatment agent A4.

(B) A resin solution, obtained by dissolving a polyester resin VYLON® GK140 manufactured by TOYOBO CO., LTD. in cyclohexanone of a solvent, mixing imino group-type melamine CYMEL® 325 manufactured by Japan SITECH INDUSTRIES Co., Ltd. so that a solid content volume ratio was 5:1 relative to the resin, and adding a curing catalyst (CYCAT 296-9: Japan SITECH INDUSTRIES Co., Ltd.) in an amount of 0.1 vol% relative to the resin solid content, was prepared to prepare a chemical treatment agent B.

(C) A chemical treatment agent C which was an aqueous solution of only 3-glycidoxypropyltriethoxysilane was prepared.

The above chemical treatment agents were each applied on the steel sheet on which the plating layer was formed to have each of coating thicknesses after drying as listed in Table 1 below, and each formed into a coating portion by being dried and baked at a peak metal temperature (PMT) of 150°C in an induction heater.

<Preparation of second member>

The same materials as those of the first members manufactured in the above manner were used as materials of second members with respect to the standards listed in Table 1 below. Here, in Table 1 below, with respect to the standards using the same materials as those of the first members as the materials of the second members, the sections of "second member" are each listed as "same as left".

Note that an alloyed hot-dip galvanized steel sheet (GA) in which a tensile strength in a sheet thickness of 1.0 mm is 980 MPa, or a standard A5000 series aluminum sheet in which a tensile strength in a sheet thickness of 1.0 mm is 290 MPa (either of which is a commercially available one) was used with respect to a part of the standards listed in Table 1 below. Further, the first member in No. 21 listed in Table 1 below (that is, a zinc-plated steel sheet having no chemical treatment coating layer) was used as the second member in No. 25 listed in Table 1 below.

<Adhesive bonding process>

A metallic hat-shaped member having flanges was manufactured by subjecting the prepared first member and second member to forming process. As an adhesive for making the first member and the second member adhere to each other and joining them, the one in which a glass bead with 200 μm was added in 5 mass% to an epoxy resin-based adhesive Penguin Cement #1066 manufactured by Sunstar Inc. was prepared. Regarding each of combinations of the first member and the second member, listed in Table 1 below, the above adhesive was applied on a surface of the first member, and the second member was further stuck thereon. Thereafter, the adhesive was cured by being left as it was in an atmosphere at 170°C for 30 minutes to manufacture a closed cross-sectional structure.

Note that in the adhesively bonded structure in No. 7, a structure of a joining member in which spot welding was also used in combination with respect to the section to which the adhesive was applied was manufactured. Concretely, the spot welding was performed at a spot interval of a 30 mm pitch under a welding condition in which a nugget diameter

became $3 \times t^{0.5}$ ($t$ is a sheet thickness [mm]) using CF-type Cr-Cu electrodes with R40, whose tip diameter was 5 mm. Note that the adhesive was not applied to a spot-welding planned portion planning for spot welding.

<Electrodeposition coating of hat member>

In order to observe an adhesive state under a corrosive environment, Zn phosphate treatment (SD5350 system: the one conforming to Nippon Paint Industrial Coding Co. Ltd. standard) was performed on the hat-shaped member subjected to the adhesive bonding process as described above, and thereafter electrodeposition coating (PN110 Power Nix Gray: Nippon Paint Industrial Coding Co., Ltd. standard) was performed with 20 $\mu$m to perform baking at a baking temperature of 150°C for 20 minutes.

<Evaluation of adhesively bonded structure>

A plurality of samples each obtained by cutting a part of the obtained adhesively bonded structure were prepared, and a micro-infrared spectroscopic analysis and a TOF-SIMS analysis were performed on a vertical section near an interface between the first member and the adhesive layer in accordance with the method explained earlier.

Note that in the micro-infrared spectroscopic analysis and the TOF-SIMS analysis, by cutting the coating portion of the vertical section near the interface between the first member and the adhesive layer in each obtained adhesively bonded structure to be inclined at five degrees with a surface and interfacial cutting analysis system (SAICAS, DN-20S type manufactured by DATPLA WINTES CO., LTD.), the coating portion was magnified. A micro-infrared spectroscopic analyzer in use is IRT-5200 manufactured by JASCO Corporation, and a TOF-SIMS in use is TOF-SIMS TRIFT-V manufactured by ULVAC-PHI Inc..

Here, in the micro-infrared spectroscopic analysis, mapping measurement was performed using the above micro-infrared spectroscopic analyzer. Whether one or more kinds of water-based polyurethane resin, epoxy resin, and polyester resin were contained and whether at least one of a Si-C bond, and, a Si-O bond or a Si-OH bond was contained were each judged from assignments of observation peaks derived from resin components in an infrared absorption spectrum of each obtained coating portion. Concretely, in each obtained infrared absorption spectrum, when a peak was observed near 910 cm$^{-1}$, an epoxy group is judged as being contained, when peaks were observed near 1550 cm$^{-1}$ and near 1740 cm$^{-1}$, a urethane group was judged as being contained, and when a peak is observed near 1720 to 1740 cm$^{-1}$, an ester group was judged as being contained. Note that in the following, a case where at least any of the epoxy group, the urethane group, or the ester group was judged as being contained was represented as A, and a case where these functional groups were judged as not being contained was represented as B.

Further, in the TOF-SIMS analysis, one arbitrary point of a portion where a thickness of the adhesive layer was thinned to about 1 $\mu$m was analyzed using the above device while performing argon sputtering from the adhesive layer side toward the metal member side. TOF-SIMS measurement was performed after the sputtering with Ar beams from the surface to a certain depth, and similarly thereafter, the TOF-SIMS measurement was repeatedly performed after performing the sputtering, and a depth direction distribution was acquired with respect to various elements and bonds. A primary ion species is Au$^{3+}$, an acceleration voltage is 30 kV, a sputter rate is about 80 nm/min (SiO$_2$ conversion), and a measurement region is 50 $\mu$m × 50 $\mu$m. The presence/absence of peaks indicating Si-O-Me bonds was checked at an interface portion between the chemical treatment coating layer (the adhesive layer in a case of having no chemical treatment coating layer) and the metal member.

In Table 1 below, an evaluation was performed on the presence/absence of the Si-O-Me bonds, and whether a Total Ion correction value exceeded $1.0 \times 10^{-3}$ or not. Note that in the following, a case of having the Si-O-Me bonds and where the Total Ion correction value exceeded $1.0 \times 10^{-3}$ was represented as A, and a case of having no Si-O-Me bond or where the Total Ion correction value was $1.0 \times 10^{-3}$ or less was represented as B.

Further, samples each obtained by cutting a part of the obtained adhesively bonded structure were each prepared, and each observed by a SEM (SU3800 manufactured by Hitachi, Ltd.) in accordance with the method explained earlier in a vertical section near an interface between the first member and the adhesive layer to calculate a ratio $L/L_0$ of an adhesion length.

<Adhesion durability evaluation>

An evaluation of joining durability was performed on the obtained adhesively bonded structures according to the examples.

First, torsional rigidity was measured and calculated by a torsion tester with respect to each adhesively bonded structure according to each example. Concretely, both ends of the adhesively bonded structure according to each example were fixed by a jig, and torsional deformation was applied to the adhesively bonded structure by rotating only one end portion with a center axis of the adhesively bonded structure set as a rotation axis. A torsion angle and a torsional moment at this time were measured, and the torsional rigidity of each adhesively bonded structure was calculated from the relation between the torsion angle and the torsional moment in an elastic deformation range. Concretely, an initial slope on a torsion angle-torsional moment diagram was used as the relation between the torsion angle and the torsional moment in the elastic deformation range.

Next, a salt spray test in accordance with JIS Z2371: 2015 was performed, and each adhesively bonded structure according to each example was left still for 4800 hours to accelerate a deterioration in the adhesive layer and the adhesive layer/chemical treatment coating layer interface. With respect to the adhesively bonded structure according to each example after leaving it still in a salt spray tester, torsional rigidity was measured and calculated by the torsion tester. Then, a decrease rate obtained through a comparison with torsional rigidity of the adhesively bonded structure according to each example, which was not subjected to the deterioration test, and a calculation of the decrease rate of the torsional rigidity due to deterioration was set as an evaluation index of the joining durability.

A decrease rate of bending strength after performing the salt spray test with respect to bending strength before performing the salt spray test was calculated, and an evaluation was performed in accordance with the following evaluation criteria. A grade C or more was set as an acceptance.

Grades AAA: decrease rate of less than 10%

AA: decrease rate of 10% or more to less than 20%
A: decrease rate of 20% or more to less than 30%
B: decrease rate of 30% or more to less than 40%
C: decrease rate of 40% or more to less than 50%
D: decrease rate of 50% or more

<Red rust resistance evaluation>

Red rust resistance was evaluated as follows.

Zn phosphate treatment (SD5350 system: the one conforming to Nippon Paint Industrial Coding Co. Ltd. standard) was performed on a sample with a size of $50 \times 100$ mm, cut from the first member of each standard listed in Table 1 below, and thereafter electrodeposition coating (PN110 Power Nix Gray: Nippon Paint Industrial Coding Co., Ltd. standard) was performed with 20 µm, and baking was performed at a baking temperature of 150°C for 20 minutes, and a cut reaching a base iron was then introduced at the center of the sample. Thereafter, a combined cyclic corrosion test in accordance with JASO (M609-91) was provided to evaluate the number of cycles in which red rust was generated.

Evaluation criteria are as follows. A grade A or more was set as an acceptance.

Grades AA: more than 60 cycles

A: not less than 30 cycles nor more than 60 cycles
B: less than 30 cycles

The obtained results were collectively listed in Table 2 below.

[Table 1]

[TABLE 1]

| No | CATEGORY | STEEL SHEET STEEL TYPE | STRENGTH MPa | PLATING LAYER COMPOSITION (mass%) Zn | Al | Mg | Si | Ca | Fe | OTHER COMPOSITION | OTHER KIND | BATH TEMPERATURE OF PLATING BATH (°C) | COATING WEIGHT OF PLATING LAYER (g/m²) | BATH COOLING RATE (°C/s) | 240~70°C COOLING RATE (°C/s) | TOTAL STRETCHING RATIO (%) | AVERAGE AREA RATIO OF α PRECIPITATION η PHASE (%) | CHEMICAL TREATMENT AGENT | THICKNESS (μm) | SECOND MEMBER | PRESENCE/ABSENCE OF SPOT WELDING |
|---|---|---|---|---|---|---|---|---|---|---|---|---|---|---|---|---|---|---|---|---|---|
| 1 | EXAMPLE | a | 270 | 98.9800 | 0.50 | 0.50 | 0.00 | 0.00 | 0.02 | – | – | 460 | 35 | 15.0 | 1.0 | 0.2 | 95 | A1 | 0.4 | SAME AS LEFT | – |
| 2 | EXAMPLE | a | 770 | 98.9800 | 0.50 | 0.50 | 0.00 | 0.00 | 0.07 | – | – | 460 | 35 | 15.0 | 1.0 | 0.2 | 95 | B | 0.5 | SAME AS LEFT | – |
| 3 | EXAMPLE | a | 270 | 98.9800 | 0.50 | 0.50 | 0.00 | 0.00 | 0.02 | – | – | 460 | 35 | 15.0 | 1.0 | 0.2 | 95 | C | 0.5 | SAME AS LEFT | – |
| 4 | EXAMPLE | a | 770 | 98.9800 | 0.50 | 0.50 | 0.00 | 0.00 | 0.07 | – | – | 460 | 35 | 15.0 | 1.0 | 0.6 | 89 | A1 | 0.7 | ALUMINUM | – |
| 5 | EXAMPLE | b | 980 | 98.1690 | 0.80 | 0.90 | 0.10 | 0.00 | 0.03 | 0.0010 | Co | 440 | 35 | 25.0 | 0.3 | 0.6 | 89 | A1 | 0.7 | SAME AS LEFT | – |
| 6 | EXAMPLE | c | 1180 | 98.1500 | 0.80 | 0.90 | 0.17 | 0.00 | 0.03 | – | – | 440 | 35 | 25.0 | 0.7 | 0.7 | 88 | A1 | 0.1 | SAME AS LEFT | PRESENCE |
| 7 | EXAMPLE | d | 1470 | 97.8790 | 1.00 | 1.00 | 0.10 | 0.00 | 0.02 | 0.0010 | V | 430 | 45 | 25.0 | 0.4 | 0.3 | 84 | A1 | 4.0 | SAME AS LEFT | – |
| 8 | EXAMPLE | d | 1470 | 97.8500 | 1.00 | 1.00 | 0.10 | 0.00 | 0.03 | 0.0200 | Ca | 430 | 35 | 25.0 | 0.4 | 0.4 | 84 | A1 | 0.7 | SAME AS LEFT | – |
| 9 | EXAMPLE | d | 1470 | 97.6890 | 1.20 | 1.20 | 0.00 | 0.00 | 0.01 | 0.0010 | Ti | 430 | 35 | 25.0 | 0.3 | 0.3 | 79 | A1 | 0.5 | SAME AS LEFT | – |
| 10 | EXAMPLE | c | 2500 | 97.3880 | 1.00 | 1.50 | 0.10 | 0.00 | 0.03 | 0.0020 | Zr | 430 | 15 | 25.0 | 0.3 | 0.2 | 70 | A2 | 0.5 | SAME AS LEFT | – |
| 11 | EXAMPLE | d | 1470 | 96.1199 | 1.50 | 2.20 | 0.10 | 0.00 | 0.08 | 0.0001 | Ni | 430 | 35 | 25.0 | 0.3 | 0.3 | 57 | – | – | SAME AS LEFT | – |
| 12 | EXAMPLE | d | 1470 | 96.1199 | 1.50 | 2.20 | 0.00 | 0.00 | 0.08 | 0.0001 | Ni | 430 | 35 | 25.0 | 0.3 | 0.3 | 57 | A2 | 0.8 | GA | – |
| 13 | EXAMPLE | d | 1470 | 96.0180 | 1.50 | 2.40 | 0.00 | 0.00 | 0.08 | 0.0020 | Sn | 430 | 35 | 25.0 | 0.3 | 0.4 | 44 | A2 | 0.5 | SAME AS LEFT | – |
| 14 | EXAMPLE | d | 1470 | 95.8100 | 1.50 | 2.50 | 0.10 | 0.00 | 0.09 | 0.0020 | Nb | 430 | 35 | 25.0 | 0.3 | 0.6 | 40 | A3 | 5.0 | SAME AS LEFT | – |
| 15 | EXAMPLE | d | 1470 | 95.7990 | 1.50 | 2.50 | 0.00 | 0.00 | 0.11 | – | – | 430 | 35 | 25.0 | 0.3 | 1.1 | 34 | A3 | 0.5 | SAME AS LEFT | – |
| 16 | COMPARATIVE EXAMPLE | d | 1470 | 95.3600 | 2.00 | 2.50 | 0.10 | 0.00 | 0.13 | 0.0100 | Sb | 420 | 60 | 25.0 | 0.3 | 0.6 | 22 | B | 0.2 | SAME AS LEFT | – |
| 17 | EXAMPLE | d | 1470 | 95.3600 | 2.00 | 2.50 | 0.10 | 0.00 | 0.13 | 0.0100 | Sb | 420 | 60 | 25.0 | 0.3 | 0.6 | 22 | C | 0.6 | SAME AS LEFT | – |
| 18 | EXAMPLE | d | 1470 | 95.3600 | 2.00 | 2.50 | 0.10 | 0.00 | 0.13 | 0.0100 | Sb | 420 | 60 | 25.0 | 0.3 | 0.6 | 22 | C | 0.6 | SAME AS LEFT | – |
| 19 | EXAMPLE | d | 1470 | 95.2900 | 2.00 | 2.50 | 0.10 | 0.06 | 0.10 | 0.0100 | Pb | 420 | 35 | 25.0 | 0.3 | 0.6 | 17 | A3 | 0.8 | SAME AS LEFT | – |
| 20 | EXAMPLE | d | 1470 | 95.2490 | 2.00 | 2.50 | 0.10 | 0.00 | 0.09 | 0.0010 | Mo | 420 | 35 | 25.0 | 0.3 | 0.6 | 12 | A3 | 0.2 | SAME AS LEFT | – |
| 21 | EXAMPLE | d | 1470 | 95.3000 | 2.00 | 2.50 | 0.10 | 0.00 | 0.10 | – | – | 420 | 35 | 25.0 | 0.3 | 0.6 | 12 | – | – | SAME AS LEFT | – |
| 22 | EXAMPLE | d | 1470 | 95.3000 | 2.00 | 2.50 | 0.10 | 0.00 | 0.10 | 0.0010 | Cu | 430 | 35 | 25.0 | 0.3 | 0.6 | 12 | A3 | 0.6 | SAME AS LEFT | – |
| 23 | EXAMPLE | d | 1470 | 94.7190 | 2.20 | 3.00 | 0.00 | 0.00 | 0.08 | 0.0010 | Cu | 430 | 90 | 25.0 | 0.3 | 0.6 | 10 | A3 | 0.7 | SAME AS LEFT | – |
| 24 | EXAMPLE | d | 1470 | 94.2780 | 2.50 | 3.00 | 0.10 | 0.00 | 0.12 | 0.0020 | Cr | 425 | 35 | 25.0 | 0.3 | 0.6 | 7 | A4 | 0.5 | SAME AS LEFT | – |
| 25 | EXAMPLE | d | 1470 | 94.2470 | 2.50 | 3.00 | 0.10 | 0.00 | 0.15 | 0.0030 | La | 420 | 35 | 25.0 | 0.3 | 0.6 | 7 | A3 | 6.0 | ZINC-BASED PLATED STEEL SHEET | – |
| 26 | EXAMPLE | d | 1470 | 93.0080 | 3.00 | 3.00 | 0.10 | 0.00 | 0.19 | 0.0020 | Ce | 415 | 120 | 20.0 | 0.3 | 1.0 | 7 | A3 | 0.8 | SAME AS LEFT | – |
| 27 | EXAMPLE | d | 1470 | 93.7199 | 3.00 | 3.00 | 0.10 | 0.00 | 0.18 | 0.0001 | B | 415 | 35 | 25.0 | 0.3 | 0.6 | 5 | A3 | 100.0 | SAME AS LEFT | – |
| 28 | EXAMPLE | d | 1470 | 94.5998 | 3.60 | 1.50 | 0.10 | 0.00 | 0.20 | 0.0002 | In | 420 | 35 | 20.0 | 0.3 | 0.6 | 19 | A3 | 0.5 | SAME AS LEFT | – |
| 29 | EXAMPLE | d | 1470 | 94.0880 | 4.00 | 1.60 | 0.10 | 0.00 | 0.21 | 0.0070 | Bi | 420 | 35 | 25.0 | 0.3 | 0.6 | 20 | A3 | 0.6 | SAME AS LEFT | – |
| 30 | EXAMPLE | d | 1470 | 94.0798 | 4.00 | 1.60 | 0.10 | 0.00 | 0.22 | 0.0002 | Ag | 420 | 35 | 25.0 | 0.3 | 0.6 | 20 | A3 | 0.7 | SAME AS LEFT | – |
| 31 | EXAMPLE | d | 1470 | 93.5869 | 4.50 | 1.60 | 0.10 | 0.00 | 0.21 | 0.0031 | Y | 420 | 35 | 25.0 | 0.3 | 0.6 | 28 | A3 | 0.5 | SAME AS LEFT | – |
| 32 | EXAMPLE | d | 1470 | 93.3580 | 4.50 | 1.80 | 0.10 | 0.00 | 0.24 | 0.0020 | Y | 420 | 35 | 25.0 | 0.3 | 0.6 | 29 | A3 | 0.7 | SAME AS LEFT | – |
| 33 | EXAMPLE | d | 1470 | 92.1480 | 5.00 | 2.50 | 0.10 | 0.00 | 0.25 | 0.0020 | Mn | 410 | 80 | 25.0 | 0.3 | 0.6 | 27 | A3 | 0.5 | SAME AS LEFT | – |
| 34 | EXAMPLE | d | 1470 | 91.6500 | 5.00 | 3.00 | 0.10 | 0.00 | 0.25 | – | – | 410 | 45 | 25.0 | 0.3 | 0.6 | 27 | A3 | 0.5 | SAME AS LEFT | – |
| 35 | EXAMPLE | d | 1470 | 91.6500 | 5.00 | 3.00 | 0.10 | 0.00 | 0.25 | – | – | 410 | 45 | 25.0 | 0.3 | 0.6 | 27 | B | 0.2 | SAME AS LEFT | – |
| 36 | EXAMPLE | d | 1470 | 91.6500 | 5.00 | 3.00 | 0.10 | 0.00 | 0.25 | – | – | 410 | 45 | 25.0 | 0.3 | 0.6 | 27 | C | 0.7 | SAME AS LEFT | – |
| 37 | COMPARATIVE EXAMPLE | b | 780 | 93.4900 | 5.30 | 1.00 | 0.00 | 0.00 | 0.21 | – | – | 470 | 40 | 15.0 | 0.4 | 0.7 | 7 | A1 | 1.5 | SAME AS LEFT | – |
| 38 | COMPARATIVE EXAMPLE | b | 780 | 98.3800 | 1.00 | 0.40 | 0.00 | 0.00 | 0.22 | – | – | 420 | 35 | 15.0 | 0.4 | 0.2 | 7 | A1 | 1.1 | SAME AS LEFT | – |
| 39 | COMPARATIVE EXAMPLE | b | 780 | 95.5200 | 1.00 | 3.30 | 0.00 | 0.00 | 0.18 | – | – | 420 | 35 | 15.0 | 0.4 | 0.2 | 2 | A1 | 1.1 | SAME AS LEFT | – |
| 40 | COMPARATIVE EXAMPLE | b | 780 | 97.8300 | 1.00 | 1.10 | 0.00 | 0.00 | 0.17 | – | – | 420 | 35 | 5.0 | 0.4 | 0.2 | 0 | A1 | 1.5 | SAME AS LEFT | – |
| 41 | COMPARATIVE EXAMPLE | b | 780 | 97.6400 | 1.20 | 1.00 | 0.00 | 0.00 | 0.16 | – | – | 420 | 35 | 10.0 | 0.4 | 0.2 | 3 | A1 | 1.5 | SAME AS LEFT | – |
| 42 | COMPARATIVE EXAMPLE | b | 780 | 97.7900 | 1.00 | 1.00 | 0.00 | 0.00 | 0.21 | – | – | 420 | 40 | 15.0 | 15.0 | 0.2 | 3 | A1 | 1.1 | SAME AS LEFT | – |
| 43 | COMPARATIVE EXAMPLE | b | 780 | 97.8300 | 1.00 | 1.00 | 0.00 | 0.00 | 0.17 | – | – | 420 | 40 | 15.0 | 5.0 | 0.1 | 80 | A1 | 1.5 | SAME AS LEFT | – |
| 44 | COMPARATIVE EXAMPLE | b | 780 | 98.4100 | 0.40 | 1.00 | 0.10 | 0.00 | 0.19 | – | – | 460 | 40 | 15.0 | 0.4 | 0.2 | 96 | – | – | SAME AS LEFT | – |
| 45 | EXAMPLE | d | 1470 | 96.3100 | 1.20 | 2.00 | 0.10 | 0.00 | 0.12 | – | – | 430 | 35 | 25.0 | 0.3 | 0.6 | 40 | A3 | 0.7 | SAME AS LEFT | – |
| 46 | EXAMPLE | d | 1470 | 95.4660 | 2.00 | 2.00 | 0.10 | 0.01 | 0.12 | 0.0040 | Sr | 420 | 200 | 25.0 | 0.3 | 0.6 | 12 | A3 | 0.5 | SAME AS LEFT | – |
| 47 | EXAMPLE | d | 1470 | 96.1590 | 1.80 | 1.50 | 0.09 | 0.00 | 0.15 | 0.0010 | Li | 430 | 35 | 75.0 | 0.3 | 0.6 | 8 | A3 | 0.6 | SAME AS LEFT | – |

[Table 2]

## TABLE 2

| No | CATEGORY | RATIO L/L₀ | Si-O-Me BOND | PRESENCE/ABSENCE OF URETHANE GROUP, ESTER GROUP, EPOXY GROUP | EVALUATION ADHESION DURABILITY | RED RUST RESISTANCE |
|---|---|---|---|---|---|---|
| 1 | EXAMPLE | 1.10 | B | B | C | A |
| 2 | EXAMPLE | 1.10 | A | A | A | A |

(continued)

| No | CATEGORY | RATIO $L/L_0$ | Si-O-Me BOND | PRESENCE/ABSENCE OF URETHANE GROUP, ESTER GROUP, EPOXY GROUP | EVALUATION | |
|---|---|---|---|---|---|---|
| | | | | | ADHESION DURABILITY | RED RUST RESISTANCE |
| 3 | EXAMPLE | 1.10 | B | A | B | A |
| 4 | EXAMPLE | 1.10 | A | B | B | A |
| 5 | EXAMPLE | 1.62 | A | A | AA | A |
| 6 | EXAMPLE | 1.22 | A | A | A | A |
| 7 | EXAMPLE | 1.21 | A | A | AAA | A |
| 8 | EXAMPLE | 1.19 | A | A | A | A |
| 9 | EXAMPLE | 1.22 | A | A | A | A |
| 10 | EXAMPLE | 1.30 | A | A | AA | AA |
| 11 | EXAMPLE | 1.42 | B | B | B | AA |
| 12 | EXAMPLE | 1.42 | A | A | AA | AA |
| 13 | EXAMPLE | 1.54 | A | A | AAA | AA |
| 14 | EXAMPLE | 1.60 | A | A | AAA | AA |
| 15 | EXAMPLE | 2.52 | A | A | AAA | AA |
| 16 | EXAMPLE | 1.76 | A | A | AAA | AA |
| 17 | EXAMPLE | 1.76 | B | A | AA | AA |
| 18 | EXAMPLE | 1.76 | A | B | AA | AA |
| 19 | EXAMPLE | 1.87 | A | A | AAA | AA |
| 20 | EXAMPLE | 1.91 | A | A | AAA | AA |
| 21 | EXAMPLE | 1.91 | B | B | A | AA |
| 22 | EXAMPLE | 1.91 | A | A | AAA | AA |
| 23 | EXAMPLE | 1.90 | A | A | AAA | AA |
| 24 | EXAMPLE | 2.01 | A | A | AAA | AA |
| 25 | EXAMPLE | 1.85 | A | A | A | AA |
| 26 | EXAMPLE | 2.35 | A | A | AAA | AA |
| 27 | EXAMPLE | 1.81 | A | A | AA | AA |
| 28 | EXAMPLE | 1.94 | A | A | AAA | AA |
| 29 | EXAMPLE | 1.75 | A | A | AAA | AA |
| 30 | EXAMPLE | 1.85 | A | A | AAA | AA |
| 31 | EXAMPLE | 1.84 | A | A | AAA | AA |
| 32 | EXAMPLE | 1.90 | A | A | AAA | AA |
| 33 | EXAMPLE | 1.82 | A | A | AAA | AA |
| 34 | EXAMPLE | 1.96 | B | B | A | AA |
| 35 | EXAMPLE | 1.96 | A | A | AAA | AA |
| 36 | EXAMPLE | 1.96 | A | A | AA | AA |
| 37 | EXAMPLE | 1.96 | A | B | AA | AA |
| 38 | COMPARATIVE EXAMPLE | 1.05 | A | A | D | B |

(continued)

| No | CATEGORY | RATIO $L/L_0$ | Si-O-Me BOND | PRESENCE/ABSENCE OF URETHANE GROUP, ESTER GROUP, EPOXY GROUP | EVALUATION | |
|---|---|---|---|---|---|---|
| | | | | | ADHESION DURABILITY | RED RUST RESISTANCE |
| 39 | COMPARATIVE EXAMPLE | 1.05 | A | A | D | B |
| 40 | COMPARATIVE EXAMPLE | 1.06 | A | A | D | A |
| 41 | COMPARATIVE EXAMPLE | 1.07 | A | A | D | A |
| 42 | COMPARATIVE EXAMPLE | 1.06 | A | A | D | A |
| 43 | COMPARATIVE EXAMPLE | 1.03 | A | A | D | A |
| 44 | COMPARATIVE EXAMPLE | 1.02 | A | A | D | A |
| 45 | COMPARATIVE EXAMPLE | 1.01 | B | B | D | B |
| 46 | EXAMPLE | 1.87 | A | A | AAA | AA |
| 47 | EXAMPLE | 1.99 | A | A | AAA | AA |
| 48 | EXAMPLE | 2.00 | A | A | AAA | AA |

As it is clear from Table 2 above, the adhesively bonded structures corresponding to the examples of the present invention exhibited excellent adhesion durability, whereas the adhesively bonded structures corresponding to the comparative examples of the present invention resulted in having poor adhesion durability.

Preferred embodiments of the present invention have been described above in detail with reference to the attached drawings, but the present invention is not limited to the embodiments. It should be understood that various changes and modifications are readily apparent to those skilled in the art who have the common general knowledge in the technical field to which the present invention pertains, within the scope of the technical spirit as set forth in claims, and they should also be covered by the technical scope of the present invention.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impart the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not respective. That is, the technique relating to the present invention can offer other clear effects to those skilled in the art from the description herein in addition to or in place of the above-described effects.

Note that the following configuration also belongs to the technical scope of the present invention.

(1) An adhesively bonded structure includes a first member, a second member, and an adhesive layer joining the first member and the second member, wherein:

the first member is a plated steel member having a steel member and a plating layer on the steel member;
the plating layer has a chemical composition containing, by mass%,
Al: 0.50 to 5.00%
Mg: 0.50 to 3.00%
Fe: 0.01 to 15.00%, and

selectively further containing one kind or two or more kinds selected from a group consisting of an element group A, an element group B, an element group C, an element group D, an element group E, an element group F, and an element group G described below, with the balance composed of Zn and impurities;

in a surface structure when a surface of the plating layer is viewed from a plane, an average area ratio of an $\alpha$ precipitation $\eta$ phase which is a metal structure in which an $\alpha$ phase precipitates into an $\eta$ parent phase is 5 to 95%; and

when a cross section cut in a lamination direction of the first member, the second member, and the adhesive layer is observed by an electron microscope in the adhesively bonded structure, an adhesion length which is a total of lengths in which the plating layer or the steel member, and the adhesive layer come in contact with each other is represented as L, and a length of an observation visual field in a direction orthogonal to a surface normal direction of the steel member is represented as $L_0$, a ratio $L/L_0$ is 1.10 or more.

[Element group A]: one kind or two kinds selected from a group consisting of Si: more than 0% to 2.00% or less, and Ca: more than 0% to 2.00% or less

[Element group B]: one kind or two or more kinds selected from a group consisting of Sb: more than 0% to 0.5000% or less, Pb: more than 0% to 0.50% or less, and Sr: more than 0% to 0.50% or less

[Element group C]: one kind or two or more kinds selected from a group consisting of Cu: more than 0% to 1.00% or less, Ti: more than 0% to 1.00% or less, Cr: more than 0% to 1.00% or less, Nb: more than 0% to 1.00% or less, Ni: more than 0% to 1.00% or less, Mn: more than 0% to 1.00% or less, Mo: more than 0% to 1.00% or less, Co: more than 0% to 1.0000% or less, and V: more than 0% to 1.0000% or less

[Element group D]: one kind or two or more kinds selected from a group consisting of Sn: more than 0% to 1.00% or less, In: more than 0% to 1.0000% or less, and Bi: more than 0% to 1.0000% or less

[Element group E]: one kind or two or more kinds selected from a group consisting of Zr: more than 0% to 1.00% or less, Ag: more than 0% to 1.00% or less, and Li: more than 0% to 1.00% or less

[Element group F]: one kind or two or more kinds selected from a group consisting of La: more than 0% to 0.50% or less, Ce: more than 0% to 0.50% or less, and Y: more than 0% to 0.50% or less

[Element group G]: B: more than 0% to 0.50% or less

(2) The adhesively bonded structure according to (1), having a chemical composition containing the element group A.
(3) The adhesively bonded structure according to (1), having a chemical composition containing the element group B.
(4) The adhesively bonded structure according to (1), having a chemical composition containing the element group C.
(5) The adhesively bonded structure according to (1), having a chemical composition containing the element group D.
(6) The adhesively bonded structure according to (1), having a chemical composition containing the element group E.
(7) The adhesively bonded structure according to (1), having a chemical composition containing the element group F.
(8) The adhesively bonded structure according to (1), having a chemical composition containing the element group G.
(9) The adhesively bonded structure according to any one of (1) to (8), wherein the plating layer contains Al of 1.00 to 5.00 mass%, and contains Mg of 1.00 to 3.00 mass%.
(10) The adhesively bonded structure according to any one of (1) to (9), wherein:

the first member further includes a chemical treatment coating layer on the plating layer; and
when the chemical treatment coating layer is present, the adhesion length L is a total of lengths in which the chemical treatment coating layer, the plating layer or the steel member, and the adhesive layer come in contact with each other.

(11) The adhesively bonded structure according to (10), wherein:

the chemical treatment coating layer at least contains at least one or more kinds of a urethane group, an epoxy group, or an ester group, and a silicon compound having at least either a Si-O bond or a Si-OH bond; and
when the chemical treatment coating layer is analyzed by a time-of-flight secondary ion mass spectrometry while performing Ar sputtering from the adhesive layer side toward the steel material side to include an arbitrary point at an interface between the plating layer and the chemical treatment coating layer, peaks corresponding to Si-O-Me bonds which are bonds with metallic elements Me (Me: Fe, Zn, Al, Mg) derived from the steel member or the plating layer are observed, and a value obtained by dividing a count number of the peaks corresponding to the Si-O-Me bonds by a total value of a count number of all secondary ions detected in a mass scan range m/z = 0 to 300 is $1.0 \times 10^{-3}$ or more.

(12) The adhesively bonded structure according to any one of (1) to (11), wherein a tensile strength of the steel member is 980 MPa or more.

(13) The adhesively bonded structure according to any one of (1) to (12), wherein a tensile strength of the steel member is 1180 MPa or more.

(14) The adhesively bonded structure according to any one of (1) to (13), wherein the ratio $L/L_0$ is 1.30 or more.

(15) The adhesively bonded structure according to any one of (1) to (14), wherein the ratio $L/L_0$ is 1.60 or more.

EXPLANATION OF CODES

1 adhesively bonded structure
10 first member
20 second member
30 adhesive layer
101 steel member
103 plating layer
105 chemical treatment coating layer
111 $\alpha$ precipitation $\eta$ phase
113 hard phase
121 $\alpha$ phase
123 $\eta$-Zn phase

**Claims**

1. An adhesively bonded structure comprising a first member, a second member, and an adhesive layer joining the first member and the second member, wherein:

   the first member is a plated steel member having a steel member and a plating layer on the steel member;
   the plating layer has a chemical composition containing, by mass%,
   Al: 0.50 to 5.00%
   Mg: 0.50 to 3.00%
   Fe: 0.01 to 15.00%, and

   selectively further containing one kind or two or more kinds selected from a group consisting of an element group A, an element group B, an element group C, an element group D, an element group E, an element group F, and an element group G described below, with the balance composed of Zn and impurities;

   in a surface structure in plan view of a surface of the plating layer, an average area ratio of an $\alpha$ precipitation $\eta$ phase which is a metal structure in which an $\alpha$ phase precipitates into an $\eta$ parent phase is 5 to 95%; and
   when a cross section cut in a lamination direction of the first member, the second member, and the adhesive layer is observed by an electron microscope in the adhesively bonded structure, an adhesion length which is a total of lengths in which the plating layer or the steel member, and the adhesive layer come in contact with each other is represented as L, and a length of an observation visual field in a direction orthogonal to a surface normal direction of the steel member is represented as $L_0$, a ratio $L/L_0$ is 1.10 or more.

   [Element group A]: one kind or two kinds selected from a group consisting of Si: more than 0% to 2.00% or less, and Ca: more than 0% to 2.00% or less
   [Element group B]: one kind or two or more kinds selected from a group consisting of Sb: more than 0% to 0.5000% or less, Pb: more than 0% to 0.50% or less, and Sr: more than 0% to 0.50% or less
   [Element group C]: one kind or two or more kinds selected from a group consisting of Cu: more than 0% to 1.00% or less, Ti: more than 0% to 1.00% or less, Cr: more than 0% to 1.00% or less, Nb: more than 0% to 1.00% or less, Ni: more than 0% to 1.00% or less, Mn: more than 0% to 1.00% or less, Mo: more than 0% to 1.00% or less, Co: more than 0% to 1.0000% or less, and V: more than 0% to 1.0000% or less
   [Element group D]: one kind or two or more kinds selected from a group consisting of Sn: more than 0% to 1.00% or less, In: more than 0% to 1.0000% or less, and Bi: more than 0% to 1.0000% or less
   [Element group E]: one kind or two or more kinds selected from a group consisting of Zr: more than 0% to 1.00% or less, Ag: more than 0% to 1.00% or less, and Li: more than 0% to 1.00% or less
   [Element group F]: one kind or two or more kinds selected from a group consisting of La: more than 0% to 0.50% or less, Ce: more than 0% to 0.50% or less, and Y: more than 0% to 0.50% or less
[Element group G]: B: more than 0% to 0.50% or less

2. The adhesively bonded structure according to claim 1, having a chemical composition containing the element group A.

3. The adhesively bonded structure according to claim 1, having a chemical composition containing the element group B.

4. The adhesively bonded structure according to claim 1, having a chemical composition containing the element group C.

5. The adhesively bonded structure according to claim 1, having a chemical composition containing the element group D.

6. The adhesively bonded structure according to claim 1, having a chemical composition containing the element group E.

7. The adhesively bonded structure according to claim 1, having a chemical composition containing the element group F.

8. The adhesively bonded structure according to claim 1, having a chemical composition containing the element group G.

9. The adhesively bonded structure according to any one of claims 1 to 8, wherein the plating layer contains Al of 1.00 to 5.00 mass%, and contains Mg of 1.00 to 3.00 mass%.

10. The adhesively bonded structure according to any one of claims 1 to 8, wherein:

    the first member further comprises a chemical treatment coating layer on the plating layer; and
    when the chemical treatment coating layer is present, the adhesion length L is a total of lengths in which the chemical treatment coating layer, the plating layer or the steel member, and the adhesive layer come in contact with each other.

11. The adhesively bonded structure according to claim 9, wherein:

    the first member further comprises a chemical treatment coating layer on the plating layer; and
    when the chemical treatment coating layer is present, the adhesion length L is a total of lengths in which the chemical treatment coating layer, the plating layer or the steel member, and the adhesive layer come in contact with each other.

12. The adhesively bonded structure according to claim 10, wherein:

    the chemical treatment coating layer at least contains at least one or more kinds of a urethane group, an epoxy group, or an ester group, and a silicon compound having at least either a Si-O bond or a Si-OH bond; and
    when the chemical treatment coating layer is analyzed by a time-of-flight secondary ion mass spectrometry while performing Ar sputtering from the adhesive layer side toward the steel member side to include an arbitrary point at an interface between the plating layer and the chemical treatment coating layer, peaks corresponding to Si-O-Me bonds which are bonds with metallic elements Me (Me: Fe, Zn, Al, Mg) derived from the steel member or the plating layer are observed, and a value obtained by dividing a count number of the peaks corresponding to the Si-O-Me bonds by a total value of a count number of all secondary ions detected in a mass scan range m/z = 0 to 300 is $1.0 \times 10^{-3}$ or more.

13. The adhesively bonded structure according to claim 11, wherein:

    the chemical treatment coating layer at least contains at least one or more kinds of a urethane group, an epoxy group, or an ester group, and a silicon compound having at least either a Si-O bond or a Si-OH bond; and
    when the chemical treatment coating layer is analyzed by a time-of-flight secondary ion mass spectrometry while performing Ar sputtering from the adhesive layer side toward the steel member side to include an arbitrary point at an interface between the plating layer and the chemical treatment coating layer, peaks corresponding to Si-O-Me bonds which are bonds with metallic elements Me (Me: Fe, Zn, Al, Mg) derived from the steel member or the plating layer are observed, and a value obtained by dividing a count number of the peaks corresponding to the Si-O-Me bonds by a total value of a count number of all secondary ions detected in a mass scan range m/z = 0 to 300 is $1.0 \times 10^{-3}$ or more.

14. The adhesively bonded structure according to claim 1, wherein a tensile strength of the steel member is 980 MPa or more.

15. The adhesively bonded structure according to claim 1, wherein a tensile strength of the steel member is 1180 MPa or more.

16. The adhesively bonded structure according to claim 1, wherein the ratio $L/L_0$ is 1.30 or more.

17. The adhesively bonded structure according to claim 1, wherein the ratio $L/L_0$ is 1.60 or more.

FIG. 1

**FIG. 2A**

**FIG. 2B**

EP 4 644 581 A1

**FIG. 3**

**FIG. 4**

38

**FIG. 5**

LENGTH OF VISUAL FIELD $L_0$

ADHESION
LENGTH L

30

105

103

101

# EP 4 644 581 A1

## INTERNATIONAL SEARCH REPORT

International application No.

**PCT/JP2024/004675**

### A. CLASSIFICATION OF SUBJECT MATTER

*C23C 2/06*(2006.01)i; *B32B 7/12*(2006.01)i; *B32B 15/01*(2006.01)i; *C22C 18/00*(2006.01)i; *C22C 18/04*(2006.01)i; *C22C 38/00*(2006.01)i; *C22C 38/04*(2006.01)i; *C23C 2/26*(2006.01)i; *C23C 28/00*(2006.01)i; *C21D 9/46*(2006.01)n
FI: C23C2/06; B32B7/12; B32B15/01 G; C22C18/00; C22C18/04; C23C28/00 C; C22C38/00 301T; C22C38/04; C23C2/26; C21D9/46 J

According to International Patent Classification (IPC) or to both national classification and IPC

### B. FIELDS SEARCHED

Minimum documentation searched (classification system followed by classification symbols)

C23C2/06; B32B7/12; B32B15/01; C22C18/00; C22C18/04; C22C38/00; C22C38/04; C23C2/26; C23C28/00; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/067430 A1 (NIPPON STEEL CORPORATION) 02 April 2020 (2020-04-02) | 1-17 |
| A | WO 2022/215694 A1 (NIPPON STEEL CORPORATION) 13 October 2022 (2022-10-13) | 1-17 |
| A | WO 2021/039973 A1 (NIPPON STEEL CORPORATION) 04 March 2021 (2021-03-04) | 1-17 |
| A | WO 2021/039971 A1 (NIPPON STEEL CORPORATION) 04 March 2021 (2021-03-04) | 1-17 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

40

## INTERNATIONAL SEARCH REPORT
### Information on patent family members

International application No.

**PCT/JP2024/004675**

| Patent document cited in search report | | | Publication date (day/month/year) | Patent family member(s) | | | Publication date (day/month/year) |
|---|---|---|---|---|---|---|---|
| WO | 2020/067430 | A1 | 02 April 2020 | US | 2021/0340407 | A1 | |
| | | | | CN | 112770903 | A | |
| | | | | EP | 3858605 | A1 | |
| WO | 2022/215694 | A1 | 13 October 2022 | CA | 3213891 | A1 | |
| | | | | CN | 117062935 | A | |
| | | | | KR | 10-2023-0155533 | A | |
| WO | 2021/039973 | A1 | 04 March 2021 | US | 2022/0298646 | A1 | |
| | | | | CN | 114341379 | A | |
| | | | | KR | 10-2022-0035208 | A | |
| | | | | EP | 4023787 | A1 | |
| WO | 2021/039971 | A1 | 04 March 2021 | US | 2022/0275481 | A1 | |
| | | | | KR | 10-2022-0035256 | A | |
| | | | | EP | 4023790 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020067430 A